# EUROPEAN PATENT APPLICATION

(11) **EP 3 030 022 A1**
(43) Date of publication of application: **08.06.2016**
(21) Application number: 14832010.4
(22) Date of filing: 28.07.2014
(51) Int. Cl.: H04W 68/02, H04W 80/10

(54) **PAGING METHOD AND APPARATUS FOR IMS SERVICE**

(30) Priority: 29.07.2013 US 201361859769 P; 26.05.2014 US 201462003014 P
(71) Applicant: LG Electronics Inc., Seoul 07336 (KR)
(72) Inventor: KIM, Laeyoung, Seoul 137-893 (KR); KIM, Taehyeon, Seoul 137-893 (KR); KIM, Jaehyun, Seoul 137-893 (KR); LEE, Youngdae, Seoul 137-893 (KR); KIM, Hyunsook, Seoul 137-893 (KR)
(74) Representative: Cabinet Plasseraud
(86) International application number: PCT/KR2014/006860
(87) International publication number: WO 2015/016546

(57) **Abstract**

The present invention relates to a wireless communication system, and more particularly, to a paging method and apparatus for an IMS service. A method which supports paging to provide an internet protocol multimedia subsystem (IMS) service to a terminal in a network node in accordance with an embodiment of the present invention may include the steps of: receiving downlink data forwarded to the terminal; when there is a determination to apply differentiated paging to the downlink data, adding information indicating that the differentiated paging is applied, to a message including the downlink data; and transmitting the message including information indicating that the differentiated paging is applied, to another network node.

## Description

### [Technical Field]

The present invention relates to a wireless communication system, and more particularly, to a paging method and apparatus for an IMS service.

### [Background Art]

An Internet Protocol (IP) multimedia subsystem (IMS) is an architectural framework for delivering an IP multimedia service in various wired/wireless communication networks. In the IMS, a protocol such as session initiation protocol (SIP) applicable to various networks is used. The SIP is a signaling protocol for controlling a multimedia service session via an IP and may be used to establish, modify and An Internet Protocol (IP) multimedia subsystem (IMS) is an architectural framework for delivering an IP multimedia service in various wired/wireless communication networks. In the IMS, a protocol such as session initiation protocol (SIP) applicable to various networks is used. The SIP is a signaling protocol for controlling a multimedia service session via an IP and may be used to establish, modify and finish a unicast or multicast session. That is, the IMS aids a user in easily accessing multimedia and voice data via various wired/wireless device(s) a unicast or multicast session. That is, the IMS aids a user in easily accessing multimedia and voice data via various wired/wireless device(s).

Session(s) including one or more media flows (or media streams) may be configured via an IMS. An IMS session may indicate logical connection between a local side and a remote side via IMS network nodes. Here, a counterpart user equipment (UE) or server of a local-side UE may be referred to as a remote end or a remote party. That is, the remote end is an entity for exchanging media flows with the local-side UE over an IMS network.

An object of the present invention devised to solve the problem lies in a paging method and apparatus for efficiently supporting an IMS service, particualry, an IMS-based voice call and voice call service.

Objects of the present invention are not limited to the aforementioned objects, and other objects of the present invention which are not mentioned above will become apparent to those having ordinary skill in the art upon examination of the following description.

### [Disclosure]

### [Technical Problem]

The object of the present invention can be achieved by providing a method for supporting paging for an IP (Internet Protocol) Multimedia Subsystem (IMS) service for a terminal in a network node, the method including receiving downlink data directed to the terminal, adding, when it is determined that differentiated paging is applied to the downlink data, information indicating that the differentiated paging is applied to a message containing the downlink data, and transmitting the message containing the information to another network node.

In another aspect of the present invention, provided herein is a network node for supporting paging for an IP (Internet Protocol) Multimedia Subsystem (IMS) service for a terminal, the network node including a transceiver module, and a processor, wherein the processor is configured to receive downlink data directed to the terminal using the transceiver module, add, when it is determined that differentiated paging is applied to the downlink data, information indicating that the differentiated paging is applied to a message containing the downlink data, and transmit the message containing the information to another network node using the transceiver module.

Embodiments according to the above aspects of the present invention may include the following details.

The downlink data subjected to the differentiated paging may be data using a bearer for Session Initiation Protocol (SIP) signaling for generating an IMS session including voice media.

The information indicating that the differentiated paging is applied may include at least one of information indicating that the message is a control message for creating an IMS session including voice media, information indicating that the downlink data is related to voice media, information indicating that the message is SIP signaling for a call containing voice media, information indicating that the message is SIP signaling for using a bearer having a QCI (QoS (Quality of Service) Class Identifier) set to 1, and information indicating that paging set to a high priority is applied to the downlink data.

The information indicating that the differentiated paging may be applied is contained in a GTP-U (GPRS Tunnelling Protocol User Plane) basic header or GTP-U extended header of the message.

The determination may be based on information received from a Policy and Charging Rules Function (PCRF).

The determination may be based on explicit or implicit information contained in the downlink data received by the network node.

The adding may be performed based on at least one of an extent of network congestion, an operator policy, a local policy, configuration information, and whether roaming of the terminal is performed.

The network node may be a packet data network gateway (PDN GW), and the another network node may be a serving gateway (S-GW).

In another aspect of the present invention, provided herein is a method for supporting paging for an IP (Internet Protocol) Multimedia Subsystem (IMS) service for a terminal in a network node, the method including receiving a message containing downlink data directed to the terminal, adding, when it is determined that differentiated paging is applied to the downlink data, information indicating that the differentiated paging is applied to a downlink data notification (DDN) message, and transmitting the DDN message containing the information to another network node.

In another aspect of the present invention, provided herein is a network node for supporting paging for an IP (Internet Protocol) Multimedia Subsystem (IMS) service for a terminal, the network node including a transceiver module, and a processor, wherein the processor is configured to receive a message containing downlink data directed to the terminal using the transceiver module, add, when it is determined that differentiated paging is applied to the downlink data, information indicating that the differentiated paging is applied to a downlink data notification (DDN) message, and transmit the DDN message containing the information to another network node using the transceiver module.

Embodiments according to the above aspects of the present invention may include the following details.

The determination may be based on information indicating that the differentiated paging is applied to the downlink data, the information being contained in the message containing the downlink data.

The information indicating that the differentiated paging is applied to the downlink data may be contained in a GTP-U (GPRS Tunnelling Protocol User Plane) basic header or GTP-U extended header of the message containing the downlink data, or may be explicit or implicit information contained in the downlink data.

The network node may be a serving gateway (S-GW), and the another network node may be a Mobility Management Entity (MME) or a Serving GPRS (General Packet Radio Service) Supporting Node (SGSN).

In another aspect of the present invention, provided herein is a method for performing paging for an IP (Internet Protocol) Multimedia Subsystem (IMS) service for a terminal in a network node, the method including receiving a downlink data notification (DDN) message, adding, when it is determined that the DDN message contains information indicating that differentiated paging is applied, the information to a paging message, and transmitting the paging message to one or more base stations.

In another aspect of the present invention, provided herein is a network node for performing paging for an IP (Internet Protocol) Multimedia Subsystem (IMS) service for a terminal, the network node including a transceiver module, and a processor, wherein the processor is configured to receive a downlink data notification (DDN) message using the transceiver module, add, when it is determined that the DDN message contains information indicating that differentiated paging is applied, the information to a paging message, and transmit the paging message to one or more base stations using the transceiver module.

Embodiments according to the above aspects of the present invention may include the following details.

The information indicating that the differentiated paging is applied may include at least one of information indicating that the DDN message is a paging request for voice media, information indicating that the DDN message is a paging request for SIP signaling for using a bearer having a QCI (QoS (Quality of Service) Class Identifier) set to 1, and information indicating that paging set to a high priority should be applied to the DDN message.

The information indicating that the differentiated paging is applied may include at least one of information announcing a paging request for SIP signaling for a call for voice media, information indicating a paging request for a control message for creation or configuration of an IMS session including voice media, information indicating a paging request for SIP signaling, information indicating a paging request for SIP signaling for using a bearer having QCI=1, EPS bearer ID or E-RAB (E-UTRAN Radio Access Bearer) ID information, and information indicating a high priority paging request.

The adding may be performed based on at least one of an extent of network congestion, an operator policy, a local policy, configuration information, whether roaming of the terminal is performed, subscriber information related to the terminal and capability information about the terminal.

The DDN message may be received from a serving gateway (S-GW).

The network node is a Mobility Management Entity (MME) or a Serving GPRS (General Packet Radio Service) Supporting Node (SGSN).

It is to be understood that both the foregoing general description and the following detailed description of the present invention are exemplary and explanatory and are intended to provide further explanation of the invention as claimed.

### [Advantageous Effects]

According to an embodiment of the present invention, a paging method and apparatus for efficiently supporting an IMS service, particualry, an IMS-based voice call and voice call service may be provided.

The effects that may be obtained from the present invention are not limited to the aforementioned effects, and other effects which are not described herein will become apparent to those skilled in the art from the following description.

### [Description of Drawings]

The accompanying drawings, which are included to provide a further understanding of the invention, illustrate embodiments of the invention and together with the description serve to explain the principle of the invention. In the drawings:
FIG. 1 is a schematic diagram showing the structure of an evolved packet system (EPS) including an evolved packet core (EPC);
FIG. 2 is a diagram exemplarily illustrating architectures of a typical E-UTRAN and EPC;
FIG. 3 is a diagram exemplarily illustrating the structrure of a radio interface protocol in a control plane;
FIG. 4 is a diagram exemplarily illustrating the structrure of an radio interface protocol in a user plane;
FIG. 5 is a flowchart illustrating a random access procedure;
FIG. 6 is a diagram illustrating a connection procedure in a radio resource control (RRC) layer;
FIG. 7 is a schematic diagram showing the structure of an IMS-based wireless communication system;
FIG. 8 illustrates network congestion;
FIG. 9 illsutrates an example of rejection of RRC connection request from a UE in a situation in which a network is congested;
FIG. 10 illustrates call reception of UEs in the situation in which the network is congested;
FIG. 11 is a flowchart illustrating an operation according to access class barring in a situation in which the network is congested;
FIG. 12 is a diagram illustrating flows an embodiment of the present invention for solving the problem of FIG. 9;
FIG. 13 is a diagram illustrating flows according to an embodiment of the present invention for solving the problem of FIG. 10;
FIG. 14 is a flowchart illustrating an embodiment of the present invention for solving the problem of FIG. 11;
FIG. 15 illustrates a paging method according to an embodiment of the present invention; and
FIG. 16 illustrates preferred configuration of a UE and a network node according to a embodiment of the present invention.

### [Best Mode]

The embodiments described below are constructed by combining elements and features of the present invention in a predetermined form. The elements or features may be considered optional unless explicitly stated otherwise. Each of the elements or features can be implemented without being combined with other elements. In addition, some elements and/or features may be combined to configure an embodiment of the present invention. The sequential order of operations discussed in the embodiments of the present invention may be changed. Some elements or features of one embodiment may also be included in another embodiment, or may be replaced by corresponding elements or features of another embodiment.

It should be noted that specific terms used in the description below are intended to provide better understanding of the present invention, and these specific terms may be changed to other forms within the technical spirit of the present invention.

In some cases, well-known structures and devices may be omitted or block diagrams illustrating only key functions of the structures and devices may be provided, so as not to obscure the concept of the present invention. The same reference numbers will be used throughout this specification to refer to the same or like parts.

Exemplary embodiments of the present invention can be supported by standard documents related to at least one of an institute of electrical and electronics engineers (IEEE) 802 system, a 3rd generation partnership project (3GPP) system, a 3GPP long term evolution (LTE) system, an LTE-advanced (LTE-A) system, and a 3GPP2 system. That is, steps or parts which are not described in the embodiments of the present invention so as not to obscure the technical spirit of the present invention may be supported by the aforementioned documents. All terms used herein may be supported by the aforementioned standard documents.

The technology described below may be employed in various wireless communication systems. For clarity, the fund description focuses on 3GPP LTE and 3GPP LTE-A. However, technical features of the present invention are not limited thereto.

The terms used in this specification are defined as follows.

UMTS (Universal Mobile Telecommunication System): Global System for Mobile Communication (GSM)-based 3rd generation mobile communication technology developed by 3GPP.

EPS (Evolved Packet System): a network system configured by an EPC (Evolved Packet Core), which is an IP based packet switched core network and an access network such as LTE, UTRAN, etc. The EPS is evolved from UMTS.

NodeB: an eNB of GERAN/UTRAN which is installed outdoors and has coverage of a macro cell scale.

eNodeB: an LTE eNB which is installed outdoors and has coverage of a macro cell scale.

UE (User Equipment): a user device. The UE may be referred to as a terminal, ME (Mobile Equipment), MS (Mobile Station), or the like. The UE may be a portable device such as a notebook computer, cellular phone, PDA (Personal Digital Assistant), smartphone, and multimedia device, or may be a nonportable device such as a PC (Personal Computer) and vehicle-mounted device. The UE can perform communication through a 3GPP spectrum such as LTE and/or a non-3GPP spectrum such as WiFi and a public safety spectrum.

RAN (Radio Access Network): a unit including a NodeB, an eNodeB and an RNC (Radio Network Controller) for controlling the NodeB and the eNodeB in a 3GPP network. The RAN is present between a UE and a core network and provides connection to the core network.

HLR (Home Location Register)/HSS (Home Subscriber Server): a database containing subscriber information of a 3GPP network. The HSS can perform functions such as configuration storage, identity management and user state storage.

RANAP (RAN Application Part): an interface between between a node (e.g., MME (Mobility Management Entity)/ SGSN (Serving GPRS (General Packet Radio Service) Supporting Node)/MSC (Mobile Switching Center)) responsible for control of a core network and a RAN.

PLMN (Public Land Mobile Network): a network configured for the purpose of providing mobile communication services to individuals. This network can be configured per operator.

NAS (Non-Access Stratum): a functional layer for signaling between a UE and a core network and exchange of a traffic message between the UE and the core network in LTE/UMTS protocol stack. The NAS mainly functions to support UE mobility and a session management procedure for establishing and maintaining IP connection between a UE and a PDN GW (Packet Data Network Gateway).

HNB (Home NodeB): CPE (Customer Premises Equipment) providing UTRAN (UMTS Terrestrial Radio Access Network) coverage. For details, refer to standard document TS 25.467.

HeNodeB (Home eNodeB): CPE providing E-UTRAN (Evolved-UTRAN) coverage. For details, refer to standard document TS 36.300.

CSG (Closed Subscriber Group): a subscriber of allowed to access at least one CSG cell in a PLMN (Public Land Mobile Network) as a constituent of the CSG of an H(e)NB.

PDN (Packet Data Network) connection: a logical connection between a UE represented by one IP address (one IPv4 address and/or one IPv6 prefix) and a PDN represented by an APN (Access Point Name).

IMS (IP Multimedia Subsystem): a subsystem for providing a multimedia service based on an IP.

IMS registration: a process of a UE delivering information about a current position thereof to a home IMS network.

AS (application server): a server for providing various multimedia services.

CSCF (Call Session Control Function): a server or proxy server for processing SIP signaling packets in an IMS. CSCFs may be divided into a proxy-CSCF (P-CSCF), a serving-CSCF (S-CSCF) and an interrogating-CSCF (I-CSCF).

MMTEL (Multimedia Telephony): telephony enabling multimedia conversational communication between two or more users through an IMS. MMTEL provides bidirectional conversational transfer of at least one of a voice/speech, an image/video, and data in real-time. For details, refer to 3GPP standard documents TS 22.173 and TS 24.173.

### Evolved Packet Core (EPC)

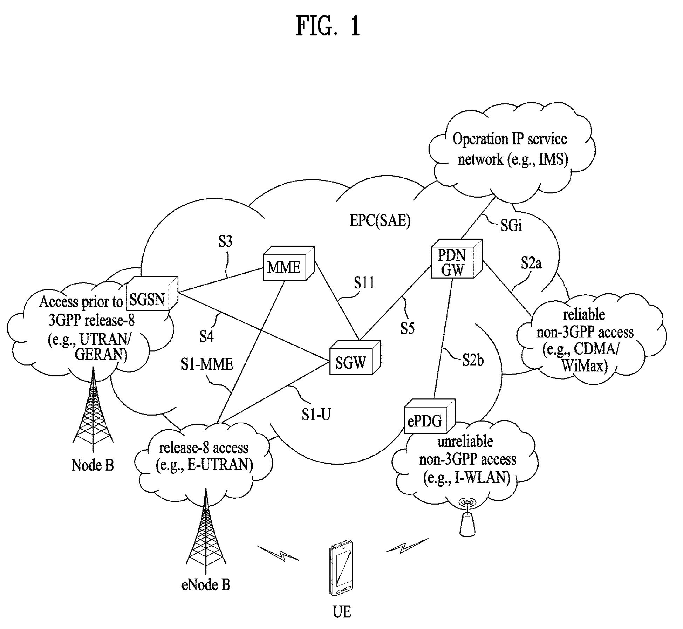

FIG. 1 is a schematic diagram showing the structure of an evolved packet system (EPS) including an evolved packet core (EPC).

The EPC is a core element of system architecture evolution (SAE) for improving performance of 3GPP technology. SAE corresponds to a research project for determining a network structure supporting mobility between various types of networks. For example, SAE aims to provide an optimized packet-based system for supporting various radio access technologies and providing an enhanced data transmission capability.

Specifically, the EPC is a core network of an IP mobile communication system for 3GPP LTE and can support real-time and non-real-time packet-based services. In conventional mobile communication systems (i.e. second-generation or third-generation mobile communication systems), functions of a core network are implemented through a circuit-switched (CS) sub-domain for voice and a packet-switched (PS) sub-domain for data. However, in a 3GPP LTE system which is evolved from the third generation communication system, CS and PS sub-domains are unified into one IP domain. That is, In 3GPP LTE, connection of terminals having IP capability can be established through an IP-based business station (e.g., an eNodeB (evolved Node B)), EPC, and an application domain (e.g., IMS). That is, the EPC is an essential structure for end-to-end IP services.

The EPC may include various components. FIG. 1 shows some of the components, namely, a serving gateway (SGW), a packet data network gateway (PDN GW), a mobility management entity (MME), a serving GPRS (general packet radio service) supporting node (SGSN) and an enhanced packet data gateway (ePDG).

The SGW operates as a boundary point between a radio access network (RAN) and a core network and maintains a data path between an eNodeB and the PDN GW. When. When a terminal moves over an area served by an eNodeB, the SGW functions as a local mobility anchor point. That is, packets. That is, packets may be routed through the SGW for mobility in an evolved UMTS terrestrial radio access network (E-UTRAN) defined after 3GPP release-8. In addition, the SGW may serve as an anchor point for mobility of another 3GPP network (a RAN defined before 3GPP release-8, e.g., UTRAN or GERAN (global system for mobile communication (GSM)/enhanced data rates for global evolution (EDGE) radio access network).

The PDN GW corresponds to a termination point of a data interface for a packet data network. The PDN GW may support policy enforcement features, packet filtering and charging support. In addition, the PDN GW may serve as an anchor point for mobility management with a 3GPP network and a non-3GPP network (e.g., an unreliable network such as an interworking wireless local area network (I-WLAN) and a reliable network such as a code division multiple access (CDMA) or WiMax network).

Although the SGW and the PDN GW are configured as separate gateways in the example of the network structure of FIG. 1, the two gateways may be implemented according to a single gateway configuration option.

The MME performs signaling and control functions for supporting access of a UE for network connection, network resource allocation, tracking, paging, roaming and handover. The MME controls control plane functions associated with subscriber and session management. The MME manages numerous eNodeBs and signaling for selection of a conventional gateway for handover to other 2G/3G networks. In addition, the MME performs security procedures, terminal-to-network session handling, idle terminal location management, etc.

The SGSN handles all packet data such as mobility management and authentication of a user for other 3GPP networks (e.g., a GPRS network).

The ePDG serves as a security node for a non-3GPP network (e.g., an I-WLAN, a Wi-Fi hotspot, etc.).

As described above with reference to FIG. 1, a terminal having IP capabilities may access an IP service network (e.g., an IMS) provided by an operator via various elements in the EPC not only based on 3GPP access but also on non-3GPP access.

Additionally, FIG. 1 shows various reference points (e.g. S1-U, S1-MME, etc.). In 3GPP, a conceptual link connecting two functions of different functional entities of an E-UTRAN and an EPC is defined as a reference point. Table 1 is a list of the reference points shown in FIG. 1. Various reference points may be present in addition to the reference points in Table 1 according to network structures.

**TABLE 1**

| Reference point | Description |
|---|---|
| S1-MME | Reference point for a control plane protocol between an E-UTRAN and an MME |
| S1-U | Reference point between an E-UTRAN and an SGW for path switching between eNodeBs during handover and user plane tunneling per bearer |
| S3 | Reference point between an MME and an SGSN that provides exchange of user information and bearer information for mobility between 3GPP access networks in the idle and/or active state. This reference point may be used in PLMN or between PLMNs (for, for example, handover between PLMNs). |
| S4 | Reference point between an SGW and an SGSN that provides control and mobility support related to 3GPP anchor functions of a GPRS core and the SGW. When a direct tunnel is not established, this reference point provides user plane tunneling. |
| S5 | Reference point that provides user plane tunneling between an SGW and a PDN GW and tunnel management. This reference point is used for redeployment of the SGW when the SGW needs to be connected to the PDN GW which is not co-located with the SGW due to UE mobility and in consideration of required PDN connectivity. |
| S11 | Reference point between an MME and an SGW |
| SGi | Reference point between a PDN GW and a PDN. The PDN may be a common or private PDN outside an operator or a PDN inside the operator for providing an IMS service. This reference point corresponds to Gi of 3GPP access. |

Among the reference points shown in FIG. 1, S2a and S2b correspond to non-3GPP interfaces. S2a is a reference point which provides reliable non-3GPP access and related control and mobility support between PDN GWs to a user plane. S2b is a reference point which provides related control and mobility support between the ePDG and the PDN GW to the user plane.

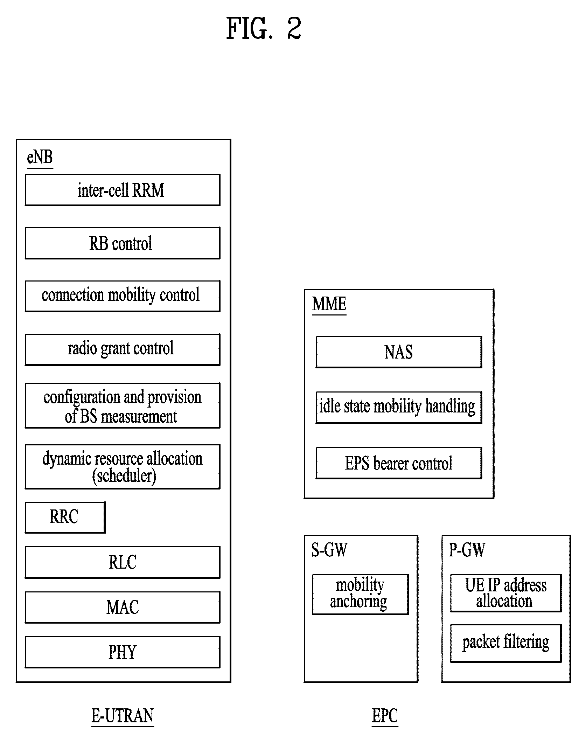

FIG. 2 is a diagram exemplarily illustrating architectures of a typical E-UTRAN and EPC.

As shown in the figure, while radio resource control (RRC) connection is activated, an eNodeB may perform routing to a gateway, scheduling transmission of a paging message, scheduling and transmission of a broadcast channel (BCH), dynamic allocation of resources to a UE on uplink and downlink, configuration and provision of eNodeB measurement, radio bearer control, radio admission control, and connection mobility control. In the EPC, paging generation, LTE_IDLE state management, ciphering of the user plane, SAE bearer control, and ciphering and integrity protection of NAS signaling.

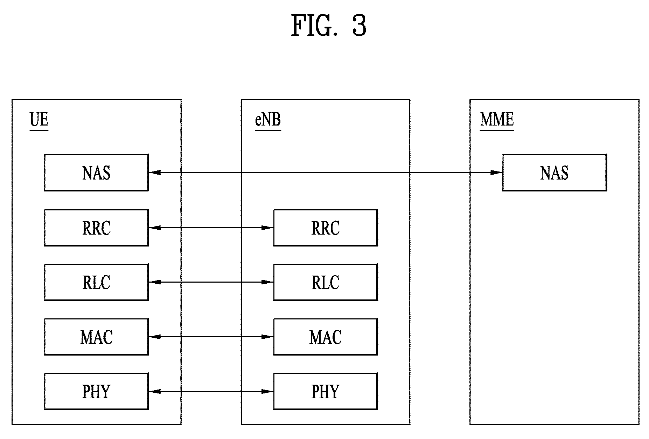

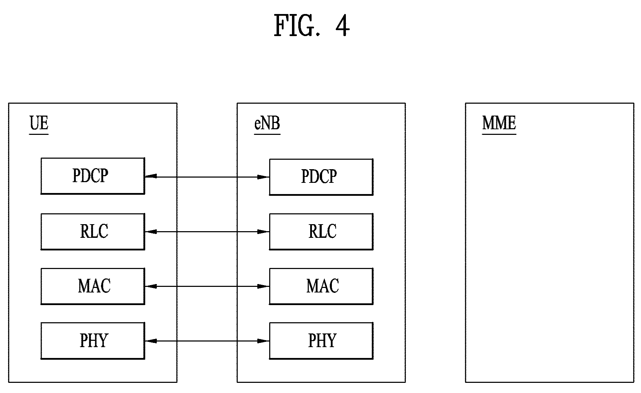

FIG. 3 is a diagram exemplarily illustrating the structrure of a radio interface protocol in a control plane between a UE and a base station, and FIG. 4 is a diagram exemplarily illustrating the structrure of a radio interface protocol in a user plane between the UE and the base station.

The radio interface protocol is based on the 3GPP wireless access network standard. The radio interface protocol horizontally includes a physical layer, a data link layer, and a networking layer. The radio interface protocol is divided into a user plane for transmission of data information and a control plane for delivering control signaling which are arranged vertically.

The protocol layers may be classified into a first layer (L1), a second layer (L2), and a third layer (L3) based on the three sublayers of the open system interconnection (OSI) model that is well known in the communication system.

Hereinafter, description will be given of a radio protocol in the control plane shown in FIG. 3 and a radio protocol in the user plane shown in FIG. 4.

The physical layer, which is the first layer, provides an information transfer service using a physical channel. The physical channel layer is connected to a medium access control (MAC) layer, which is a higher layer of the physical layer, through a transport channel. Data is transferred between the physical layer and the MAC layer through the transport channel. Transfer of data between different physical layers, i.e., a physical layer of a transmitter and a physical layer of a receiver is performed through the physical channel.

The physical channel consists of a plurality of subframes in the time domain and a plurality of subcarriers in the frequency domain. One subframe consists of a plurality of symbols in the time domain and a plurality of subcarriers. One subframe consists of a plurality of resource blocks. One resource block consists of a plurality of symbols and a plurality of subcarriers. A Transmission Time Interval (TTI), a unit time for data transmission, is 1 ms, which corresponds to one subframe.

According to 3GPP LTE, the physical channels present in the physical layers of the transmitter and the receiver may be divided into data channels corresponding to Physical Downlink Shared Channel (PDSCH) and Physical Uplink Shared Channel (PUSCH) and control channels corresponding to Physical Downlink Control Channel (PDCCH), Physical Control Format Indicator Channel (PCFICH), Physical Hybrid-ARQ Indicator Channel (PHICH) and Physical Uplink Control Channel (PUCCH).

The second layer includes various layers.

First, the MAC layer in the second layer serves to map various logical channels to various transport channels and also serves to map various logical channels to one transport channel. The MAC layer is connected with an RLC layer, which is a higher layer, through a logical channel. The logical channel is broadly divided into a control channel for transmission of information of the control plane and a traffic channel for transmission of information of the user plane according to the types of transmitted information.

The radio link control (RLC) layer in the second layer serves to segment and concatenate data received from a higher layer to adjust the size of data such that the size is suitable for a lower layer to transmit the data in a radio interval.

The Packet Data Convergence Protocol (PDCP) layer in the second layer performs a header compression function of reducing the size of an IP packet header which has a relatively large size and contains unnecessary control information, in order to efficiently transmit an IP packet such as an IPv4 or IPv6 packet in a radio interval having a narrow bandwidth. In addition, in LTE, the PDCP layer also performs a security function, which consists of ciphering for preventing a third party from monitoring data and integrity protection for preventing data manipulation by a third party.

The Radio Resource Control (RRC) layer, which is located at the uppermost part of the third layer, is defined only in the control plane, and serves to configure radio bearers (RBs) and control a logical channel, a transport channel, and a physical channel in relation to reconfiguration and release operations. The RB represents a service provided by the second layer to ensure data transfer between a UE and the E-UTRAN.

If an RRC connection is established between the RRC layer of the UE and the RRC layer of a wireless network, the UE is in the RRC Connected mode. Otherwise, the UE is in the RRC Idle mode.

Hereinafter, description will be given of the RRC state of the UE and an RRC connection method. The RRC state refers to a state in which the RRC of the UE is or is not logically connected with the RRC of the E-UTRAN. The RRC state of the UE having logical connection with the RRC of the E-UTRAN is referred to as an RRC_CONNECTED state. The RRC state of the UE which does not have logical connection with the RRC of the E-UTRAN is referred to as an RRC_IDLE state. A UE in the RRC_CONNECTED state has RRC connection, and thus the E-UTRAN may recognize presence of the UE in a cell unit. Accordingly, the UE may be efficiently controlled. On the other hand, the E-UTRAN cannot recognize presence of a UE which is in the RRC_IDLE state. The UE in the RRC_IDLE state is managed by a core network in a tracking area (TA) which is an area unit larger than the cell. That is, for the UE in the RRC_IDLE state, only presence or absence of the UE is recognized in an area unit larger than the cell. In order for the UE in the RRC_IDLE state to be provided with a usual mobile communication service such as a voice service and a data service, the UE should transition to the RRC_CONNECTED state. A TA is distinguished from another TA by a tracking area identity (TAI) thereof. A UE may configure the TAI through a tracking area code (TAC), which is information broadcast from a cell.

When the user initially turns on the UE, the UE searches for a proper cell first. Then, the UE establishes RRC connection in the cell and registers information thereabout in the core network. Thereafter, the UE stays in the RRC_IDLE state. When necessary, the UE staying in the RRC_IDLE state selects a cell (again) and checks system information or paging information. This operation is called camping on a cell. Only when the UE staying in the RRC_IDLE state needs to establish RRC connection, does the UE establish RRC connection with the RRC layer of the E-UTRAN through the RRC connection procedure and transition to the RRC_CONNECTED state. The UE staying in the RRC_IDLE state needs to establish RRC connection in many cases. For example, the cases may include an attempt of a user to make a phone call, an attempt to transmit data, or transmission of a response message after reception of a paging message from the E-UTRAN.

The non-access stratum (NAS) layer positioned over the RRC layer performs functions such as session management and mobility management.

Hereinafter, the NAS layer shown in FIG. 3 will be described in detail.

The eSM (evolved Session Management) belonging to the NAS layer performs functions such as default bearer management and dedicated bearer management to control a UE to use a PS service from a network.. The UE is assigned a default bearer resource by a specific packet data network (PDN) when the UE initially accesses the PDN. In this case, the network allocates an available IP to the UE to allow the UE to use a data service. The network also allocates QoS of a default bearer to the UE. LTE supports two kinds of bearers. One bearer is a bearer having characteristics of guaranteed bit rate (GBR) QoS for guaranteeing a specific bandwidth for transmission and reception of data, and the other bearer is a non-GBR bearer which has characteristics of best effort QoS without guaranteeing a bandwidth. The default bearer is assigned to a non-GBR bearer. The dedicated bearer may be assigned a bearer having QoS characteristics of GBR or non-GBR.

A bearer allocated to the UE by the network is referred to as an evolved packet service (EPS) bearer. When the EPS bearer is allocated to the UE, the network assigns one ID. This ID is called an EPS bearer ID. One EPS bearer has QoS characteristics of a maximum bit rate (MBR) and/or a guaranteed bit rate (GBR).

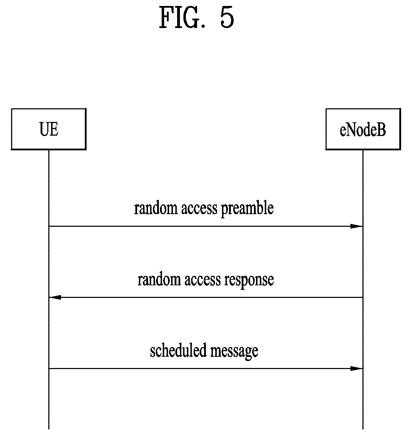

FIG. 5 is a flowchart illustrating a random access procedure in 3GPP LTE.

The random access procedure is used for a UE to obtain UL synchronization with an eNB or to be assigned a UL radio resource.

The UE receives a root index and a physical random access channel (PRACH) configuration index from an eNodeB. Each cell has 64 candidate random access preambles defined by a Zadoff-Chu (ZC) sequence. The root index is a logical index used for the UE to generate 64 candidate random access preambles.

Transmission of a random access preamble is limited to a specific time and frequency resources for each cell. The PRACH configuration index indicates a specific subframe and preamble format in which transmission of the random access preamble is possible.

The UE transmits a randomly selected random access preamble to the eNodeB. The UE selects a random access preamble from among 64 candidate random access preambles and the UE selects a subframe corresponding to the PRACH configuration index. The UE transmits the selected random access preamble in the selected subframe.

Upon receiving the random access preamble, the eNodeB sends a random access response (RAR) to the UE. The RAR is detected in two steps. First, the UE detects a PDCCH masked with a random access (RA)-RNTI. The UE receives an RAR in a MAC (medium access control) PDU (protocol data unit) on a PDSCH indicated by the detected PDCCH.

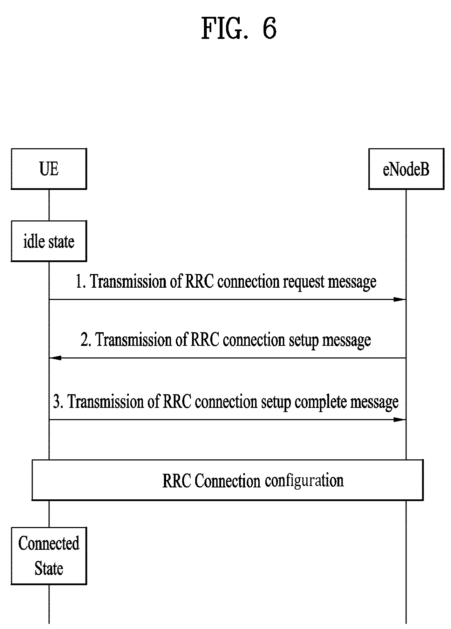

FIG. 6 illustrates a connection procedure in a radio resource control (RRC) layer.

As shown in FIG. 6, the RRC state is set according to whether or not RRC connection is established. An RRC state indicates whether or not an entity of the RRC layer of a UE has logical connection with an entity of the RRC layer of an eNodeB. An RRC state in which the entity of the RRC layer of the UE is logically connected with the entity of the RRC layer of the eNodeB is called an RRC connected state. An RRC state in which the entity of the RRC layer of the UE is not logically connected with the entity of the RRC layer of the eNodeB is called an RRC idle state.

A UE in the Connected state has RRC connection, and thus the E-UTRAN may recognize presence of the UE in a cell unit. Accordingly, the UE may be efficiently controlled. On the other hand, the E-UTRAN cannot recognize presence of a UE which is in the idle state. The UE in the idle state is managed by the core network in a tracking area unit which is an area unit larger than the cell. The tracking area is a unit of a set of cells. That is, for the UE which is in the idle state, only presence or absence of the UE is recognized in a larger area unit. In order for the UE in the idle state to be provided with a usual mobile communication service such as a voice service and a data service, the UE should transition to the connected state.

When the user initially turns on the UE, the UE searches for a proper cell first, and then stays in the idle state. Only when the UE staying in the idle state needs to establish RRC connection, does the UE establish RRC connection with the RRC layer of the eNodeB through the RRC connection procedure and then transition to the RRC connected state.

The UE staying in the idle state needs to establish RRC connection in many cases. For example, the cases may include an attempt of a user to make a phone call, an attempt to transmit data, or transmission of a response message after reception of a paging message from the E-UTRAN.

In order for the UE in the idle state to establish RRC connection with the eNodeB, the RRC connection procedure needs to be performed as described above. The RRC connection procedure is broadly divided into transmission of an RRC connection request message from the UE to the eNodeB, transmission of an RRC connection setup message from the eNodeB to the UE, and transmission of an RRC connection setup complete message from the UE to eNodeB, which are described in detail below with reference to FIG. 6.
1) When the UE in the idle state desires to establish RRC connection for reasons such as an attempt to make a call, a data transmission attempt, or a response of the eNodeB to paging, the UE transmits an RRC connection request message to the eNodeB first.
2) Upon receiving the RRC connection request message from the UE, the ENB accepts the RRC connection request of the UE when the radio resources are sufficient, and then transmits an RRC connection setup message, which is a response message, to the UE.
3) Upon receiving the RRC connection setup message, the UE transmits an RRC connection setup complete message to the eNodeB. Only when the UE successfully transmits the RRC connection setup message, does the UE establish RRC connection with the eNodeB and transition to the RRC connected mode.

### IP Multimedia Subsystem (IMS)

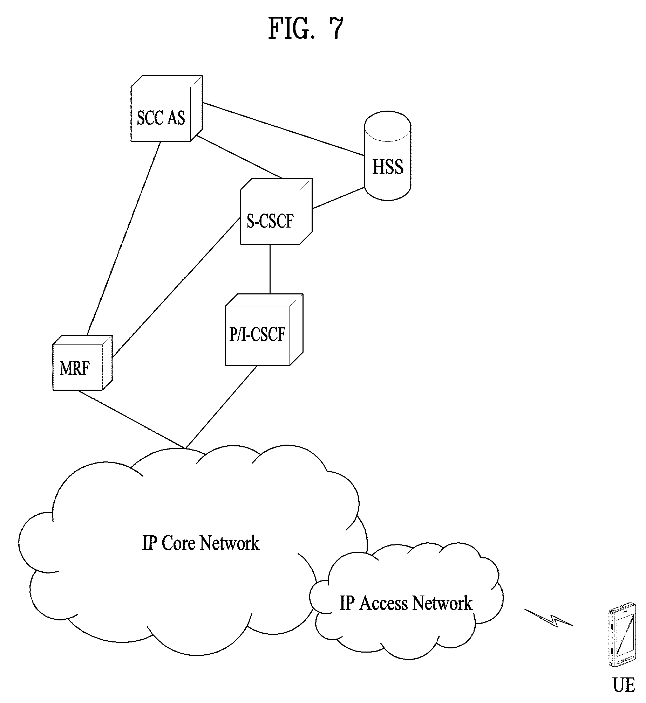

FIG. 7 is a schematic diagram showing the structure of an IMS-based wireless communication system.

An IMS-based wireless litigation system may include various components. FIG. 7 shows a UE, and an access network, a core network, an MRF (Multimedia Resource Function), a P/I-CSCF, an S-CSCF, an AS, and an HSS (Home Subscriber Server) which corresponds to a part of the components.

A UE may perform communication with IMS-related nodes and/or other UEs over an IP wireless access network such as the E-UTRAN and an IP core network. A UE having an IP capability may have a unique ID (e.g., IMPU ID such as SIP URI or Tel URI) and an IP address.

The MRF corresponds to a server providing a media-related function such as media adjustment (e.g., voice stream mixing), and includes an MRFC and an MRFP. The MRFC functions to analyze information from the AS and the S-CSCF and control the MRFP. The MRFP functions to mix, provide or process media streams.

The P-CSCF is an SIP proxy server serving as a contact point for an IMS UE. The P-CSCF may function to implement security of a message between a network and a UE and allocate a resource to a media flow.

The I-CSCF is an SIP server serving as a contact point from a peered network. The I-CSCF may function to send a query to the HSS to determine an S-CSCF for the UE.

The S-CSCF is a server that handles SIP registration, and performs determination of locations of respective UEs, UE authentication, call processing (e.g., call routing), and the like. For example, when a UE desires to be registered in an IMS network, a registration message of the UE containing the type of media supported by the UE, codec-related information, a screen size, and the like may be delivered to the S-CSCF via the P-CSCF. Operation of the S-CSCF may be controlled according to a policy stored in the HSS.

The SCC AS is a home network-based IMS application server that provides functions required for an IMS centralized service and is used for service continuity of multimedia sessions.

The HSS may perform functions such as configuration storage, identity management and user state storage.

In the 3GPP E-UTRAN (i.e., LTE), a voice service is supported in the form of IMS-based PS (packet switched) voice. This form may be called IMS voice over PS session. An IMS service such as Voice over LTE (Vo LTE) (i.e., ALL IP service) uses an IMS session initiation protocol (SIP)-based signal as a control signal for transmission and reception of a call.

### IMS-based Service Connection

When the UE makes an RRC connection request in order to transmit data of the user plane, the network, e.g., the base station (i.e., eNodeB) may reject the request if the network is in the congested state. On the other hand, when the UE makes an RRC connection request in order to transmit a signal of the control plane for request for a circuit switch (CS)-based call, the network, e.g., the base station (i.e., eNodeB) cannot reject the request even if the network is in the congested state.

As described above, an IMS service (i.e., ALL IP service) such as VoLTE uses an IMS SIP-based signal as a control signal for transmission and reception of a call. Such SIP-based control signals are transmitted in the user plane, not in the control plane. Accordingly, when the UE makes an RRC connection request to transmit an SIP-based control signal to initiate the IMS service (i.e., ALL IP service) such as VoLTE, the network, e.g., the base station (i.e., eNodeB) may reject the request if the network is in the congested state.

Accordingly, in the congested state of the network, the call may be dropped. Hereinafter, a method to solve this problem will be described.

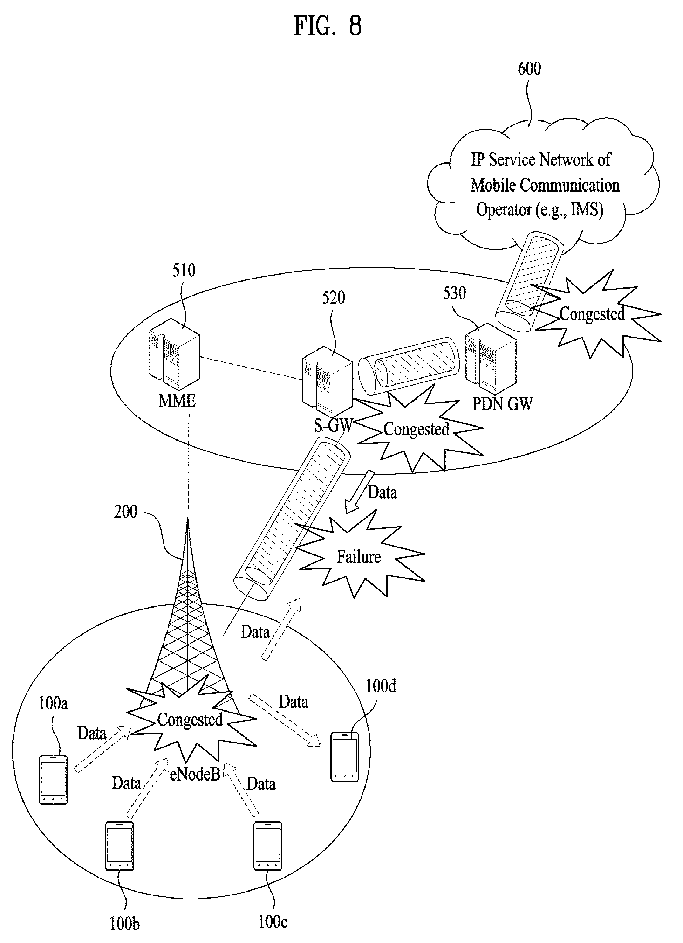

FIG. 8 illustrates network congestion.

As shown in FIG. 8, numerous UEs 100a, 100b, 100c, and 100d are present in the coverage of an eNodeB 200 and attempt to perform data transmission and reception. Thereby, if the interface between the eNodeB 200 and an S-GW 520 becomes overloaded or congested by traffic, downlink data to the UEs 100 or uplink data from the UEs fails to be correctly transmitted.

As another case, if the interface between the S-GW 520 and the PDN-GW 530 or the interface between the PDN-GW 530 and the IP (Internet protocol) service network of a mobile communications operator is overloaded or congested, downlink data to the UEs 100a, 100b, 100c, and 100d or uplink data from the UEs 100a, 100b, 100c, and 100d fails to be correctly transmitted.

If the interface between the eNodeB 200 and the S-GW 520 or the interface between the S-GW 520 and the PDN-GW 530 is overloaded or congested, a node (e.g., MME) of the core network performs NAS level congestion control to avoid signaling congestion and APN congestion.

Congestion control at the NAS level includes APN based congestion control and general NAS level mobility management control.

APN based congestion control means congestion control of EMM, GMM and (E)SM signals related to the UE and a specific APN (an APN related to the congested state), and includes APN based Session Management congestion control and APN based Mobility Management congestion control.

On the other hand, general NAS level mobility management control means that a node (MME, SGSN) in the core network avoids congestion or overload by rejecting a mobility management signaling request sent from a UE/MS in the congested or overloaded situation of the network.

Generally, when the core network performs NAS level congestion control, the core network transmits a value of a back-off timer to the UE which is in the idle mode or connected mode, through a NAS reject message. Thereby, until the back-off timer expires, the UE does not make a request for an EMM/GMM/(E)SM signal to the network. The NAS reject message corresponds to one of an ATTACH REJECT message, a TAU (Tracking Area Updating) reject message, an RAU (Routing Area Updating) reject message, a service reject message, an EXTENDED SERVICE reject message, a PDN connectivity reject message, a bearer resource allocation reject message, a bearer resource modification reject message, and a reject message for a deactivate EPS bearer context request.

Back-off timers may be divided into a Mobility Management (MM) back-off timer and a Session Management (SM) back-off timer.

The MM back-off timer independently operates for each UE, and the SM back-off timer independently operates for each APN and each UE.

Briefly, the MM back-off timer is intended to control EMM/GMM signals (e.g., an Attach request, a TAU/RAU request, etc.). The SM back-off timer is intended to control (E)SM signals (e.g., a PDN connectivity request, a Bearer Resource Allocation request, a Bearer Modification request, a PDP Context Activation request, a PDP Context Modification request, etc.).

Specifically, the MM back-off timer is a mobility-related back-off timer which is used to control congestion occurring in the network. While the MM back-off timer is operating, the timer does not allow the UE to perform any of the attach procedure, the location information update (TAU, RAU) procedure, and the service request procedure. For an emergency bearer service and a multimedia priority service (MPS), however, the UE may be exceptionally allowed to make a request for the service even if the timer is running.

As described above, the UE may receive an MM back-off timer value from a core network node (e.g., MME, SGSN, etc.) or a lower layer (access stratum). In addition, the value may be randomly set within a range of 15 minutes to 30 minutes by the UE.

The SM back-off timer is a Session Management-related back-off timer which is used to control network congestion. While the timer operates, the timer does not allow the UE to configure or change an associated APN-based session. For an emergency bearer service and a multimedia priority service (MPS), however, the UE 100 may be exceptionally allowed to make a request for the service even if the timer is running.

The UE receives an SM back-off timer value from a core network node (e.g., MME, SGSN etc.). The value may be randomly set within a maximum of 72 hours. In addition, the value may be randomly set within a range of 15 minutes to 30 minutes by the UE 100.

When the eNodeB 200 is subjected to congestion, the eNodeB 200 may perform congestion control. That is, if the eNodeB 200 is in the congested state when the UE requests RRC connection establishment in order to transmit data of the user plane, the eNodeB 200 may transmit an extended wait timer and a reject response to the UE. In this case, the UE cannot reattempt to request RRC connection establishment until the extended wait timer expires. On the other hand, when the UE makes an RRC connection request in order to transmit a signal of the control plane for reception of a CS (circuit switch)-based call, the eNodeB 200 cannot reject the request even if the eNodeB 200 is in the congested state.

An ALL IP service such as VoLTE (Voice over LTE) uses an IMS SIP-based signal as a control signal for transmission and reception of a call. Such SIP-based control signals are transmitted in the user plane, not in the control plane. Accordingly, when the UE makes an RRC connection request to transmit an SIP-based control signal to initiate an ALL IP service such as VoLTE, the network, e.g., the base station (i.e., eNodeB) may reject the request if the network is congested.

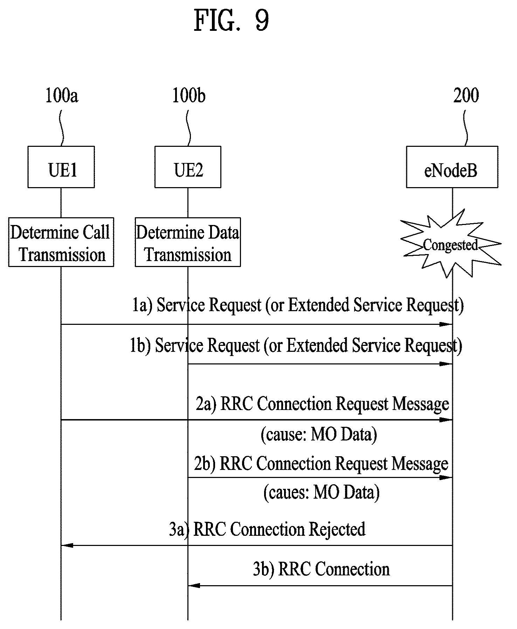

Accordingly, in the congested state of the network, the call may be dropped. This situation will be described in detail below with reference to FIG. 9.

FIG. 9 illsutrates an example of rejection of an RRC connection request from a UE in the congestion state of the eNodeB shown in FIG. 8.

As can be seen from FIG. 9, when the eNodeB 200 is in the congested state, UE1 100a in the idle state determines to transmit a call by an IMS service, e.g., VoLTE. Similarly, UE2 100b in the idle state determines to transmit general data.
1) In order to transmit a call by an IMS service, e.g., VoLTE, a higher layer of UE1 100a, e.g., the NAS layer, sets an establishment cause field to "MO (Mobile Originating) Data" indicating data whose transmission is initiated by the UE, and then transmits a Service Request message. In addition, in order to transmit general data, a higher layer of UE2 100b, e.g., the NAS layer sets the establishment cause field to "MO (Mobile Originating) Data" indicating data whose transmission is initiated by the UE, then transmits a Service Request message.
2) As a control signal for transmission and reception of a call by VoLTE, a control signal based on the SIP of the IMS is used and transmitted in the user plane. Accordingly, a higher layer of UE1 100a, e.g., the NAS layer, sets the establishment cause field to "MO (Mobile Originating) Data", and transfers the set value to the RRC layer. Then, the RRC layer of the UE1 100a sets the establishment cause field in the RRC connection request message to "MO (Mobile Originating) Data", and transmits the message to the eNodeB 200.
   Similarly, a higher layer of UE2 100b, e.g., the NAS layer sets the establishment cause field to "MO (Mobile Originating) Data", and transfers the set value to the RRC layer. Then, the RRC layer of the UE2 100b sets the establishment cause field in the RRC connection request message to "MO (Mobile Originating) Data", and transmits the message to the eNodeB 200.
3) Then, the eNodeB 200 in the overloaded state receives the RRC connection request messages from the UE1 100a and the UE2 100b, and checks the establishment cause fields in the respective messages.

Since the establishment cause fields in the RRC connection request messages from the UE1 100a and the UE2 100b are both set to MO data, the eNodeB 200 in the congested state transmits an RRC connection reject message in response to both RRC connection requests from the UE2 100b and the UE1 100a.

Accordingly, if the eNodeB 200 is in the congested state, even the VoLTE call is dropped.

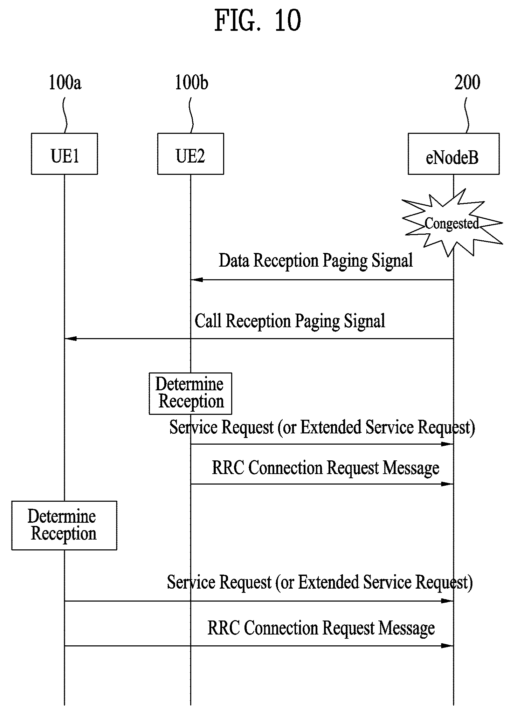

FIG. 10 illustrates call reception of UEs in the congestion state of the eNodeB shown in FIG. 8.

0) As can be seen from FIG. 10, the eNodeB 200 in the congested state or a normal state transmits a paging signal for reception of a call by an IMS service, e.g., VoLTE to UE1 100a which is in the idle state, and transmits a paging signal for reception of data to UE2 100b which is in the idle state.

Herein, the paging signals may not contain information indicating whether the paging signals are intended for reception of a call by the IMS service, e.g. VoLTE or for reception of data.

Since the eNodeB 200 cannot distinguish between the paging signal for reception of a call by the IMS service, e.g. VoLTE, and the paging signal for reception of data, the eNodeB 200 cannot differentiate between the paging signals transmitted to the UE1 100a and the UE2 100b. In addition, in a congested state, the paging signal for reception of a call by the IMS service, e.g. VoLTE, may be transmitted later than the paging signal for reception of data.

Thereby, UE1 100a may transmit a service request (or extended service request) message and an RRC connection request message later than UE2 200b, and thus reception of a call by the IMS service, e.g. VoLTE, may be deferred.

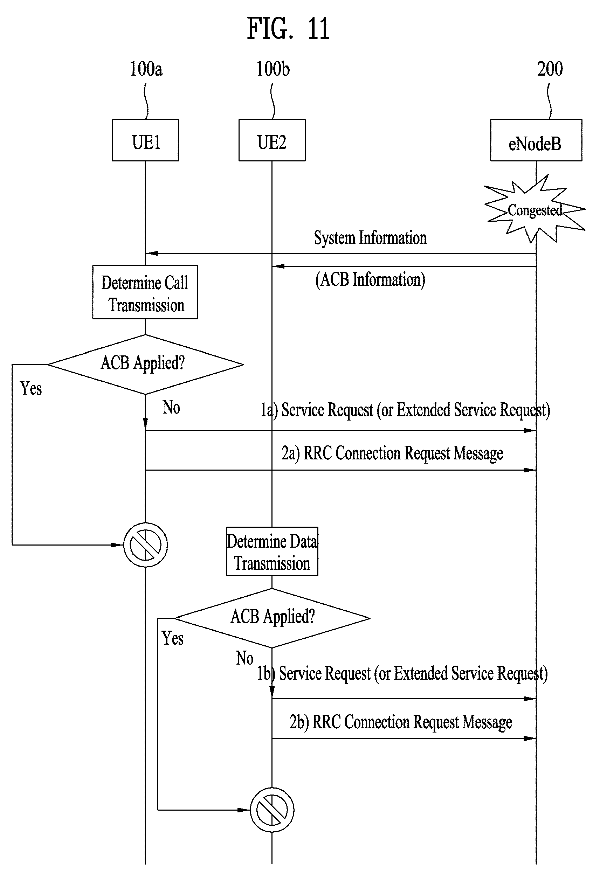

FIG. 11 is a flowchart illustrating an operation according to access class barring in a situation in which the network is congested.

As shown in FIG. 11, when the network or the eNodeB 200 is in the overloaded or congested state, the eNodeB 200 may broadcast Access Class Barring (ACB)-related information through system information. The system information may be of SIB (System Information Block) type 2.

The SIB type 2 may include ACB-related information as shown in the following table.

**TABLE 2**

| Field | Description |
|---|---|
| ac-BarringFactor | Access is allowed if a random value generated by the UE is less than the value of ac-BarringFactor. Otherwise, access is barred. |
| ac-BarringForCSFB | ACB for CS (circuit switch) fallback. CS fallback switches a VoLTE call to a previous 3G call. |
| ac-BarringForEmergency | ACB for an emergency service |
| ac-BarringForMO-Data | ACB for originating data of the UE |
| ac-BarringForMO-Signalling | ACB for an originating signaling control signal of the UE |
| ac-BarringForSpecialAC | ACB for special access classes, i.e., classes 11-15 |
| ac-BarringTime | This field indicates a time for which access is barred. |
| ssac-BarringForMMTEL- | ACB per service for originating signaling of an MMTEL |

| Video | video |
|---|---|
| ssac-BarringForMMTEL-Voice | ACB per service for originating signaling of an MMTEL voice |

The UE1 100a determines to transmit a call by an IMS service, e.g., VoLTE, and determines whether the call is an object to which the ACB is applied. Similarly, UE2 100b determines to transmit general data, and determines whether the data is an object to which the ACB is applied.

Generally, the UE is randomly assigned at least one of 10 access classes (e.g., AC0, AC1, ..., AC9). For emergency access, AC10 is exceptionally allocated. The value of the randomly allocated access class may be stored in the USIM of each of the UE1 100a and UE2 100b.

Then, the UE1 100a and the UE2 100b check if access barring is applied based on the stored access class using the BarringFactor field included in the received ACB-related information. Checking of access barring is performed by the Access Stratum (AS) layer, i.e., the RRC layer of each of the UE1 100a and the UE2 100b.

If the transmission is not subjected to ACB, the UE1 100a and the UE2 100b may transmit a service request (or extended service request) message and an RRC connection request message, respectively.

However, if the transmission is subjected to ACB, neither the UE1 100a nor the UE2 100b can transmit an RRC connection request message.

In summary, an RRC connection request for originating signaling of a call from the UE1 100a by an IMS service, e.g., VoLTE, and an RRC connection request for transmission of general data from the UE2 100b are not distinguished from each other, and thus ACB is applied to both requests.

As described above, in the current 3GPP standard, IMS-based call transmission is not distinguished from transmission of general data. Thereby, IMS-based call transmission fails in a situation in which the network is congested as shown in FIG. 9, or even the attempt to perform IMS-based call transmission is not allowed. This problem results in waste of network resources and deteriorate user experience.

Hereinafter, description will be given of methods of the present invention to solve the problems described above.

According to one disclosure of the present specification, a control signal of an IMS-based service, e.g., a VoLTE service, for example, an IMS-based control signal or SIP-based control signal may be differentiated from general data and processed even if the control signal is transmitted to the user plane.

Specifically, according to one disclosure of the present specification, when the UE intends to transmit a call by an IMS-based service, e.g., VoLTE, the NAS layer of the UE sets the establishment cause field to a value other than 'MO data' and delivers the value to the RRC layer, and the RRC layer of the UE in turn transmits an RRC connection request message, such that transmission of the call is not rejected even in the situation of congestion of the eNodeB 200.

More specifically, according to one disclosure of the present invention, when the UE intends to transmit an IMS-based call (e.g., a voice call or a video call), the NAS layer of the UE sets the RRC establishment cause to "MO-signaling" or a new cause value (e.g., IMS-based transmission or "MO-IMS MMTEL service") rather than to "MO Data" for a control signal for transmission of an IMS-based call, e.g., IMS-based control signal or SIP-based control signal. In addition, the NAS layer of the UE may deliver the set establishment cause to the NAS layer, i.e., the RRC layer, such that the RRC layer uses the establishment cause set by the NAS layer to transmit an RRC connection request message. The UE sets a service type (or field) indicating the IMS-based service to IMS Voice, IMS Video, MMTEL over PS Session, or a new service type (field) value, sets (includes) the value in a service request or extended service request message, and then transmits the message. According to one disclosure of the present specification, a control signal for connecting an IMS-based voice call or video call, an IMS-based control signal or an SIP-based control signal may be transmitted through a new NAS message (e.g., IMS SERVICE REQUEST) rather than a typical service request message.

Then, the eNodeB 200 in the congested or overloaded state may process the received RRC connection request message differently from rejection of general data, based on "MO-signaling" or a new cause value set in the RRC establishment cause field of the received RRC connection request message. In the case where the eNodeB 200 is not in the congested or overloaded state, the received RRC connection request message may be processed with a higher priority (or lower priority) than general data if the RRC establishment cause field of the received RRC connection request message is set to "MO-signaling" or the new cause value.

According to an embodiment of the present invention, when a call is received by the IMS-based service, i.e., VoLTE, a network node (e.g., S-GW, P-GW) may inform the MME 510 of the call such that a control signal for reception of the call by VoLTE, e.g., the IMS control signal or the SIP-based control signal, is distinguished from reception of general data. Thereby, the MME 510 may distinguishably transfer a paging signal to the UE, such that the UE sets the establishment cause field to "MT-access" or a new cause value when the UE generates an RRC connection request message.

Then, the eNodeB 200 in the congested or overloaded state may accept and process the received RRC connection request message based on "MT-access" or the new cause value set in the RRC establishment cause field rather than rejecting the message.

Hereinafter, a description will be given of an example of the eNodeB 200 processing a message differently from general data when the RRC establishment cause field of the message is set to "MO-signaling" or a new cause value.
- Processing an RRC connection request message having the RRC establishment cause field set to "MO-signaling" or a new cause value with a priority higher than that of an RRC connection request set to "MO-Data"
- Processing an RRC connection request message having the RRC establishment cause field set to "MO-signaling" or a new cause value with a priority higher than or equal to that of an RRC connection request set to "highPriorityAccess"
- Processing an RRC connection request message having the RRC establishment cause field set to "MO-signaling" or a new cause value with a priority higher than or equal to that of an RRC connection request set to "MT-Access"
- Processing an RRC connection request message having the RRC establishment cause field set to "MO-signaling" or a new cause value (for identifying an IMS-based service) with a priority higher than or equal to that of an RRC connection request set to (conventional typical) "MO-signaling"
- Rejecting an RRC connection request message having the RRC establishment cause field set to "MO-signaling" or a new cause value with a priority lower than or equal to that of an RRC connection request set to "MO-Data"

Rejecting an RRC connection request message having the RRC establishment cause field set to "MO-signaling" or a new cause value with a priority lower than or equal to that of an RRC connection request set to "highPriorityAccess"
- Rejecting an RRC connection request message having the RRC establishment cause field set to "MO-signaling" or a new cause value with a priority lower than or equal to that of an RRC connection request set to "MT-Access"
- Rejecting an RRC connection request message having the RRC establishment cause field set to "MO-signaling" or a new cause value (for identifying an IMS-based service) with a priority lower than or equal to that of an RRC connection request set to (conventionally general) "MO-signaling"

Meanwhile, differentiation of an IMS-based voice call and video call from general data may change depending on operator policy, configuration of a network node (e.g., MME/SGSN, eNodeB), subscriber information, or the capability of the UE.

The following table shows establishment cause values added according to one disclosure of the present specification.

**TABLE 3**

| Establishment cause | Description |
|---|---|
| Emergency | An emergency service is needed. |
| High Priority Access | Access with a higher priority is needed. |
| MT-Access | Access according to call reception of the UE is needed |
| MO-Signaling | A control signal for call transmission of the UE for an attach request, a TAU request, or an IMS voice/video/MMTEL service |
| | |
| MO-IMS service or MO-IMSMMTELservice or new cause | The control signal for call transmission of the UE for an IMS service or an IMS-based MMTEL service |
| | |
| MO-IMS Access | Originating signaling of an access for an IMS service |
| | |
| MO-Data | Originating signaling of data by the UE |
| | |

Hereinafter, solutions proposed in the present specification will be described with reference to the drawings.

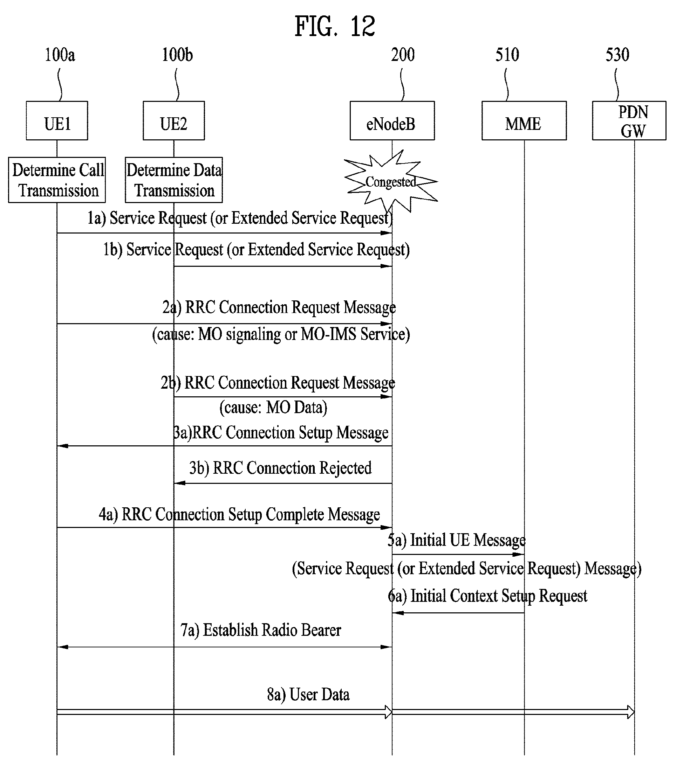

FIG. 12 is an exemplary diagram illustrating flows according to a first disclosure of the present specification for solving the problem of FIG. 9.

As can be seen from FIG. 12, UE1 100a determines an IMS service, e.g., transmission of an IMS-based call, and UE2 100b determines transmission of data. The IMS-based call may be a voice call, a video call, or a call according to MMTEL.

Details of the operation are described below with reference to FIG. 12.
1) A higher layer of UE1 100a, e.g., the NAS layer, sets the establishment cause field to "MO-signaling" or a new cause, e.g., "MO-IMS service" or "MO-IMS MMTEL service" as shown in Table 2 rather than to conventional "MO-Data" to provide an IMS service, e.g., transmission of an IMS-based call. In addition, the higher layer of UE1 100a, e.g., the NAS layer, transmits a Service Request message or an Extended Service Request message that contains a service type (field) indicating signaling or an IMS-based service. That is, the service type (field) indicating signaling or an IMS-based service may be set to IMS Voice, IMS Video, MMTEL over PS Session, or a new service value.
   [A higher layer of UE2 100b, e.g., the NAS layer, sets the establishment cause field to "MO (Mobile Originating) Data" indicating data whose transmission is initiated by the UE. In addition, the higher layer of UE2 100b, e.g., the NAS layer, transmits a Service Request message or an Extended Service Request message.
2) Subsequently, the higher layer of the UE1 100a, e.g., the NAS layer, transfers the set value of the establishment cause field, i.e., "MO-signaling" or "MO-IMS service" to the RRC layer. Then, the RRC layer of the UE1 100a sets the establishment cause field in the RRC connection request message according to the transferred value and transmits the message to the eNodeB 200.
   A higher layer of UE2 100b, e.g., the NAS layer, transfers the set value of the establishment cause field, i.e., "MO Data" to the RRC layer. Then, the RRC layer of the UE2 100b sets the establishment cause field in the RRC connection request message to "MO Data", and transmits the message to the eNodeB 200.
3) Upon receiving the RRC connection request message from the UE1 100a and the RRC connection request message from the UE2 100b, the eNodeB 200 in the overloaded state checks the establishment cause fields in the respective messages.
   Since the establishment cause field in the RRC connection request message from the UE1 100a is set to "MO-signaling" or "MO-IMS service", the eNodeB 200 in the congested state does not reject the RRC connection request message from the UE1 100a, but delivers an RRC connection setup message to the UE1 100a.
   However, the eNodeB 200 transmits an RRC connection reject message in response to the RRC connection request message from the UE2 100b since the establishment cause field in the RRC connection request message from the UE2 100b is set to "MO Data".
4) The UE1 100a receiving the RRC connection setup message delivers an RRC connection setup complete message to the eNodeB 200.
5-7) The eNodeB 200 delivers, to the MME 510, an initial UE message containing a service request message or an extended service request message. Then, the MME 510 sends an initial context setup request message to the eNodeB 200. Then, the eNodeB 200 establishes a radio bearer with the UE1 100a.
8) Lastly, the UE1 100a may transmit user data by the IMS service, e.g., an IMS-based call.

While FIG. 12 illustrates an exemplary case where UE1 100a attempts to transmit an IMS-based call, and UE2 200b attempts to transmit general data, the same principle is applicable to a case where one UE attempts to transmit an IMS-based call and general data simultaneously.

The operation of the UE1 100a differently setting the establishment cause field depending on whether the transmission is transmission of an IMS-based call or transmission of general data may or may not be applied depending on operator policy, configuration of the network node (e.g., MME, eNodeB), subscriber information, or the capability of the UE. In addition, the operation may be applied only in the situation in which the network node (e.g., MME, eNodeB) is subjected to congestion or overload. Alternatively, the UE may signal the capability information or supportability information to the network through Attach/TAU (Tracking Area Update)/RAU (Routing Area Update), and the network may determine whether to apply the operation. The applicability of the operation determined in the network may be provided to an NAS configuration MO (Management Object, 3GPP TS 24.368) through OMA-DM. This configuration method may be statically or dynamically changed and applied.

While FIG. 12 illustrates the establishment cause field as being set to "MO-signaling" or "MO-IMS service", "MO-IMS Access", "MO-IMS MMTEL service", or a value indicating a new cause may be set in the establishment cause field.

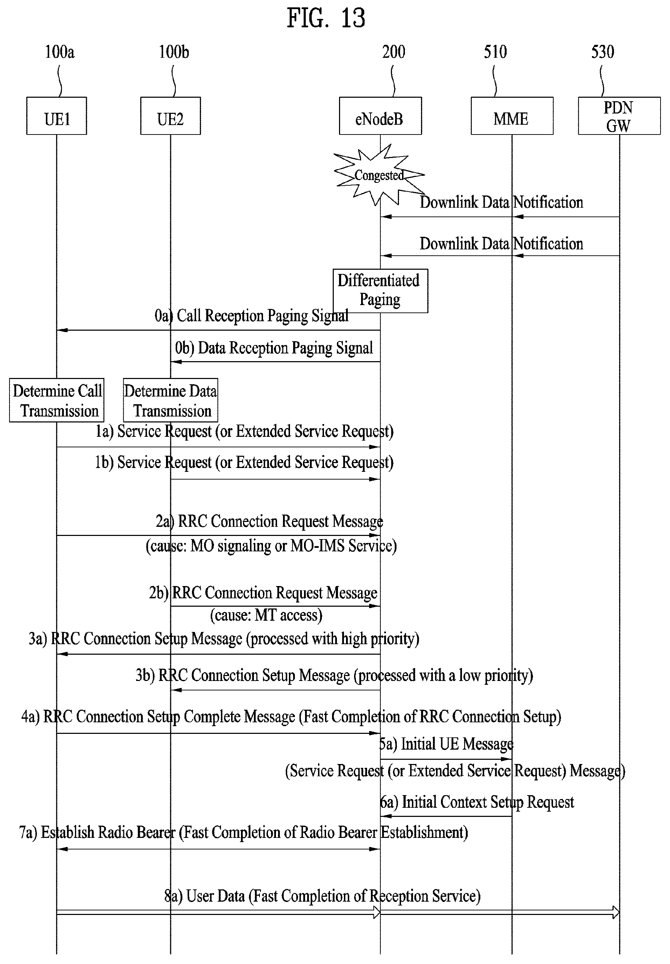

FIG. 13 is a diagram illustrating flows according to the first disclosure of the present specification for solving the problem in the call reception situation of FIG. 10.

First, the PDN GW 530 transmits a notification of downlink data for signaling reception of a call by an IMS service, e.g., VoLTE, for UE1 100a to the eNodeB 200 through the MME 510, and also transmits a notification of downlink data for signaling reception of general data for UE2 100b to the eNodeB 200 through the MME 510.

The PDN GW 530 identifies whether a control signal for reception of a call is an IMS-based control signal, an SIP-based control signal, or a general control signal, and announces the identified control signal to the MME 510. Similarly, the MME 510 identifies whether a control signal for reception of a call is an IMS-based control signal, an SIP-based control signal, or a general control signal, and announces the identified control signal to the eNodeB 200. Herein, the IMS-based control signal or SIP-based control signal may be identified by information indicating whether a given session is an IMS session. The information may be a factor (or indicator) contained in the existing control message or in a new control message. The factor (or indicator) is transmitted from the PDN GW 530 or S-GW to the MME 510 through a control message. The MME 510 recognizes the factor (or indicator), and transmits information indicating the IMS-based control signal or SIP-based control signal to the eNodeB 200 through a paging signal. The UE1 100a may set the establishment cause field to "MT-access", "MT-IMS Access", "MT-signaling", "MT-IMS Service", or a value indicating a new cause according to information added to the paging signal.

Thereby, the eNodeB 200 in the congested state may differentiate the paging signal from the other signals. For example, the eNodeB 200 may prioritize processing of a call by an IMS service, e.g., VoLTE, over processing of a paging signal for announcing reception of general data.

In addition, the eNodeB 200 in the congested state transmits the information to UE1 100a which is in the idle state through a paging signal for reception of a call by an IMS service, e.g., VoLTE. Herein, the eNodeB 200 may transmit the paging signal based on the information, the congestion state of the network, operator policy, capability information about the UE, and the like. For example, when the eNodeB 200 receives the information, the eNodeB 200 may determine that a paging signal for UE1 100a is transmitted even if the eNodeB 200 determines that a general paging signal is not transmitted since the network is congested.

However, the eNodeB 200 transmits a simple paging signal to the UE2 100b. The paging signal directed to UE2 100b may be broadcast. On the other hand, a paging signal directed to UE1 100a may be broadcast or transmitted over a new dedicated channel.

As described above, a paging signal for an IMS-based service may be differentiated and provided to UE1 100a. Differentiating the paging signal means that a paging signal for announcing connection of an IMS of-based service is processed with a priority higher than the priority of a paging signal for announcing reception of general data.

The method for differentiating the paging signal for an IMS-based service may or may not be applied depending on operator policy, configuration of the network node (e.g., MME or eNodeB), subscriber information, or the capability configuration of the UE. In addition, the method may be applied only in the situation in which the network node (e.g., MME, eNodeB) is subjected to congestion or overload. Alternatively, the UE may signal the capability information or supportability information about the UE to the network node through Attach/TAU/RAU, and the network node may subsequently determine whether to apply the operation. Whether or not the method is applied may be provided to a NAS configuration MO (Management Object, 3GPP TS 24.368) through OMA-DM. This configuration method may be statically or dynamically changed and applied.

Hereinafter, description will be given of establishment causes contained in an attach request message, a detach request message, a TAU request message and a service request message transmitted by the UE.

When NAS connection establishment is requested, establishment causes used by the NAS layer which is a higher layer of the UE may be selected according to the procedure shown in the table given below. The NAS layer may indicate a time related to an RRC establishment cause to the RRC layer which is a lower layer of the UE, for the purpose of access control. If Extended Access Barring (EAB) is configured, the UE may inform the lower layer that the EAB is applied to requests except in the following cases:
- the UE attempts to perform access using one of classes 11-15;
- the UE responds to a paging signal;
- the RRC establishment cause is an emergency call;
- the UE is configured to override EAB.

**TABLE 4**

| NAS Procedure | Establishment Cause | Type |
|---|---|---|
| Attach Procedure | If the attach request message has an EPS attach type which is not set to EPS emergency attach, the RRC establishment cause is set to MO-signaling. | Signaling initiated by the UE (originating signaling) |
| | If the attach request message has an EPS attach type which is set to EPS emergency attach, the RRC establishment cause is set to emergency call. | Emergency call |
| Tracking Area Update | If the UE neither has PDN connection established for an emergency bearer service, nor initiates a PDN connection request having a request type set to emergency, the RRC establishment cause is set to MO-signaling. | Signaling initiated by the UE (originating signaling) |
| Service Request | If a service request message or an extended service request message (or a new NAS message) has a service type set to "mobile originating IMS Voice/Video/MMTEL over PS Session", and requests originating signaling for an IMS voice/video/MMTEL service over the PS session, the RRC establishment cause is set to MO-signaling or a new cause value, e.g., MO-IMS service or IMS MMTEL service. | Signaling initiated by the UE (originating signaling) |
| | If a service request message or an extended service request message is transmitted in resonse to a paging signal for an IMS voice/video/MMTEL service over the PS session and has a service type set to "mobile terminating IMS Voice/Video/MMTEL over PS Session", the RRC establishment cause is set to MT access. | Terminating calls of the UE |
| | If a service request message or an extended service request message contains Device Properties having a low priority indicator set to "MS is not configured to NAS signaling low priority", and has a service type set to "mobile originating IMS Voice/Video/MMTEL over PS Session", the RRC establishment cause is set to MT access. | Signaling initiated by the UE (originating signaling) |

Although not shown in the table above, the service type of the service request message or extended service request message may be set to one of "mobile originating IMS Voice", "mobile originating IMS Video" and "mobile originating IMS MMTEL over PS Session". In this case, each (individual) type may be set/mapped to "originating calls". Alternatively, the service type of the service request message or extended service request message may be set to "mobile originating IMS Voice/Video/MMTEL over PS Session".

Similarly, the service type of the service request message or extended service request message may be set to one of "mobile terminating IMS Voice", "mobile terminating IMS Video" and "mobile terminating IMS MMTEL over PS Session". In this case, each (individual) type may be set/mapped to "terminating calls". Alternatively, the service type of the service request message or extended service request message may be set to "mobile terminating IMS Voice/Video/MMTEL over PS Session".

The method of setting the establishment cause to MO-signaling or MO-IMS service in the service request message or extended service request message may also be utilized by a UE having a low priority or a normal priority.

When a UE set to a low priority switches to a normal priority according to a request from an application, the capability of the UE, operator policy or a request from the network, and requests originating signaling for the IMS-based service, the UE may transmit, to a network node (e.g., MME), an extended service request message containing an IE set to a normal priority rather than to a low priority. In this case, the NAS layer of the UE may transmit an extended service request message having an establishment cause set to "MO-signaling" or a new cause value (e.g., MO-IMS access or MO-IMS MMTEL service).

Then, the eNodeB 200 may differentiate connection for an MO-IMS service (particularly, a voice call and a video call) from the other services and process the same based on "MO-signaling" or the new cause value set as the establishment cause of the received RRC connection request message.

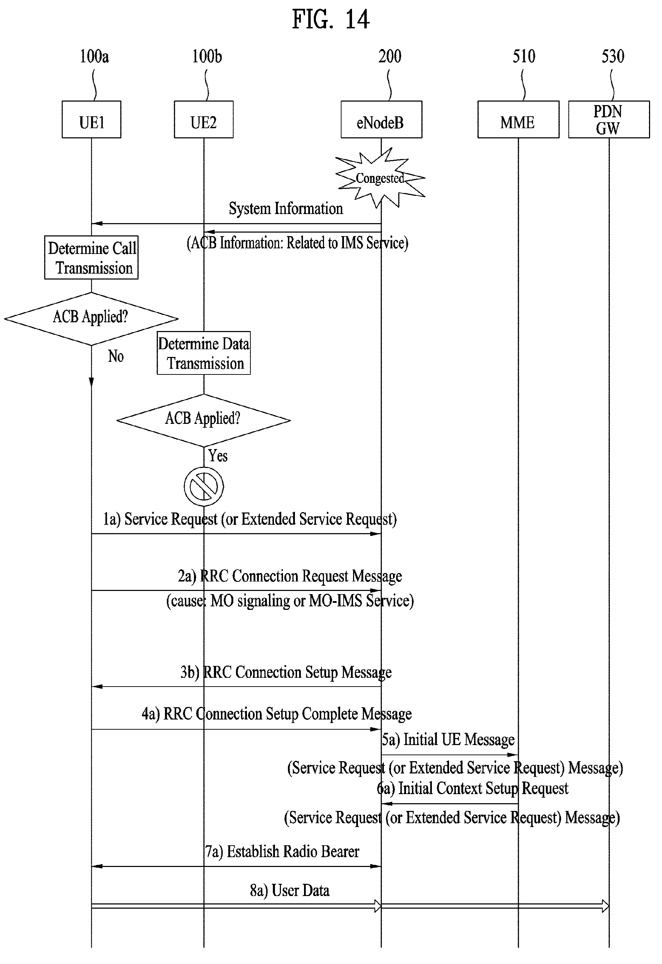

FIG. 14 is an exemplary diagram illustrating flows according to a second disclosure of the present specification for solving the problem of FIG. 11.

As can be seen from FIG. 14, according to the second disclosure of the present specification, to differentiate an IMS-based control signal for connection of an IMS-based service from the other signals, the eNodeB 200 may broadcast system information including ACB information containing an exception rule for MO-signaling or a new cause (e.g., MO-IMS service or IMS MMTEL service) among establishment causes.

Then, UE1 100a desiring to transmit an IMS-based call and UE2 100b desiring to transmit general data may determine whether or not to apply ACB based on the ACB information containing the exception rule.

That is, UE1 100a does not check, based on MO-Data which is a conventionally used establishment cause, if the ACB is applied to IMS-based control signaling for connection of an IMS-based service (e.g., an IMS-based voice call or video call) or SIP-based control signaling, but checks if the ACB is applied based on an establishment cause set according to the present disclosure, i.e., MO-signaling or a new cause (e.g., MO-IMS service or IMS MMTEL service). Since the received ACB information contains an exception for MO-signaling or new cause (e.g., MO-IMS service or IMS MMTEL service) among the establishment causes, the UE1 100a determines that the RRC connection request is not subjected to ACB. Accordingly, the UE1 100a may transmit the RRC connection request.

Thereby, an RRC request message for carrying IMS-based control signaling for connection of an IMS-based service (e.g., an IMS-based voice call or video call) or SIP-based control signaling may be normally processed by the eNodeB 200 without being rejected.

The following table shows ACB information containing an exception rule for MO-signaling or a new cause (e.g., MO-IMS service or IMS MMTEL service) among establishment causes.

**TABLE 5**

| Field | Description |
|---|---|
| ac-BarringFactor | Access is allowed if a random value generated by the UE is less than the value of ac- BarringFactor. Otherwise, access is barred. |
| ac-BarringForCSFBa | ACB for CS (circuit switch) fallback. CS fallback switches a VoLTE call to a previous 3G call. |
| ac-BarringForEmergency | ACB for an emergency service |
| ac-BarringForMO-Data | ACB for originating data of the UE |
| ac-BarringForMO- | ACB for an originating signaling control signal of the UE |

| Signalling | or signaling for originating of an IMS service |
|---|---|
| ac-BarringForMO-IMS service or IMS MMTEL service or new cause | ACB for signaling for originating signaling of an IMS service |
| ac-BarringForSpecialAC | ACB for special access classes, i.e., classes 11-15 |
| ac-BarringTime | This field indicates a time for which access is barred. |
| ssac-BarringForMMTEL-Video | ACB per service for originating signaling of MMTEL video |
| ssac-BarringForMMTEL-Voice | ACB per service for originating signaling of MMTEL voice |

The first disclosure and the second disclosure of the present specification have been described above. It is apparent to those skilled in the art that the disclosures may be combined.

The disclosures of the present specification are summarized.

If the UE 100 determines that connection of an IMS-based service (e.g., an IMS-based voice call or video call) is needed, the NAS layer of the UE sets the establishment cause field to "MO-signaling" or a new cause (e.g., "MO-IMS service", "MO-IMS MMTEL service" or "MO-IMS Access") as shown in Table 3 rather than to the conventional "MO-Data", and transmits a Service Request message or an Extended Service Request message. Subsequently, the NAS layer of the UE delivers the set establishment cause to the RRC layer. The RRC layer of the UE sets the received establishment cause in an RRC request message for carrying IMS-based control signaling for selection of an IMS-based service (e.g., an IMS-based voice call or video call) or SIP-based control signaling, and transmits the message to the eNodeB 200.

Meanwhile, the eNodeB 200 may deliver, to the UE 100, information about "MO-signaling" or the new cause (e.g., "MO-IMS service", MO-IMS MMTEL service" or "MO-IMS Access") shown in Table 3 as an establishment cause value usable for the RRC request message for carrying control signaling for connection of the IMS-based service, i.e., IMS-based control signaling or SIP-based control signaling.

In addition, once the eNodeB 200 receives the service request message, extended service request message or RRC connection request message containing the establishment cause set to "MO-signaling" or the new cause (e.g., "MO-IMS service", "MO-IMS MMTEL service" or "MO-IMS Access"), the eNodeB 200 may process the message by differentiating the message from a request message containing the establishment cause set to "MO Data" in the congested or overloaded state.

### Paging Method for IMS Service

If a downlink packet to be transmitted to a UE in the idle mode or idle state is generated, the downlink packet is transferred from the P-GW to the S-GW. Upon receiving the downlink packet from the P-GW, the S-GW transmits a downlink data notification (DDN) message to the MME. The DDN message may be a message requesting that the MME transmit a paging message to the UE. The MME receiving the DDN message transmits the message for requesting paging to eNB(s), and the eNB(s) perform paging upon receiving the paging request message.

Such conventional paging method does not distinguish between an IMS-based service (e.g., a voice call, a video call, etc.) and a non-IMS-based service (i.e., packet service).

Specifically, to create or configure a session including an IMS-based voice call/video call, IMS signaling or SIP signaling (hereinafter, collectively referred to as SIB signaling) is exchanged between a calling UE (or originating UE) and a called UE (or terminating UE). Such SIP signaling is transmitted in the user plane rather than in the control plane. Accordingly, the general data service (i.e., non-IMS-based packet service) is not distinguished from the IMS-based service.

Accordngly, the conventional wireless communication system does not support even the method of providing services by distinguishing between the IMS-based voice call/video call and the general data service. In this case, when network congestion occurs, service quality of the voice call/video call to which the user is sensitive may be degraded, thereby deteriorating user experience. To solve this problem, a method to distinguish an IMS-based service containing voice media from the other services is needed.

The present invention provides a method to distinguish between the non-IMS data packet service and the IMS-based service (e.g., VoLTE) in view of a party receiving a service (e.g., in view of a called party or terminating party or with respect to an MT (mobile terminated) call). Specifically, the present invention proposes a method to support a differentiated service by distinguishing between an IMS service (e.g., a voice call, video call, MMTel (multimedia telephony service) voice, MMTel video, IMS-based voice call, IMS-based video call, etc.) including voice media and a general data service (e.g., non-IMS service). More specifically, the present invention proposes a paging method for enabling a party receiving a service to distinguish between an IMS service including voice media and a non-IMS service (or a method for applying differentiated paging to a service which includes voice and a service which does not include voice).

Unless explicitly stated otherwise in the following description, terms such as traffic, service, IP service, flow, IP flow, service flow, packet, IP packet, data, message and application should be understood as being represented by one of the terms. These terms are used interchangeably.

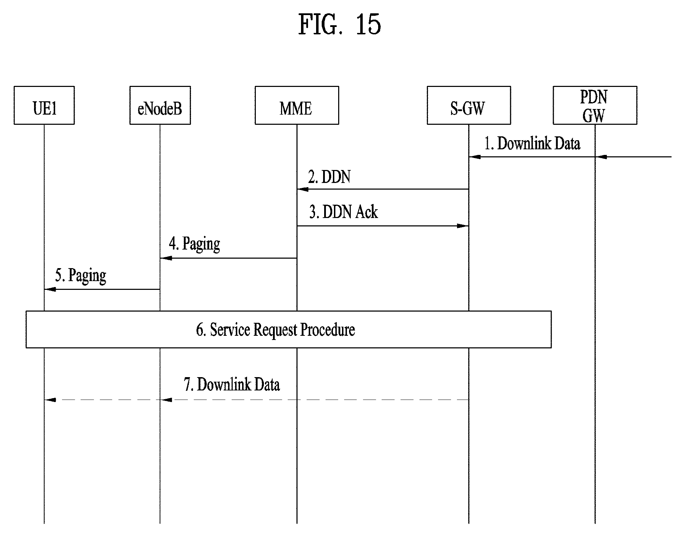

FIG. 15 illustrates a paging method according to an embodiment of the present invention.

In the example of FIG. 15, it is assumed that UE1 is in the ECM (EPS Connection Management)-IDLE state (or idle mode, idle state). While the example of FIG. 15 focuses on network nodes (e.g., P-GW, S-GW, MME) of the EPS, other network nodes may also be added.

In step 1 of FIG. 15, if data (i.e., downlink data or MT (Mobile Terminating) data) directed to UE 1 is generated and the PDN GW (i.e., P-GW) receives the data, the P-GW transmits the downlink data to the S-GW.

Herein, the P-GW may additionally perform the following operations.
i) The P-GW may determine (or consider or recognize) whether the downlink data (or MT data) is data using an EPS bearer for SIP signaling (or SIP signaling) and whether the SIP signaling creates or configures an IMS session including voice media (wherein the EPS bearer for SIP signaling may be a bearer having a QCI (QoS (Quality of Service) Class Identifier) set to 5 in the PDN for the IMS service, and the voice media may use a bearer having the QCI set to 1).
ii) The P-GW may determine (or consider or recognize) whether the downlink data (or MT data) is data for which paging assigned a higher priority (or set to/differentiated by a higher level) is required.

If any one of the conditions in the operations i) and ii) is satisfied (namely, if the downlink data is data using an EPS bearer for SIP signaling for creating an IMS session including voice media and/or if the downlink data is data for which paging assigned/differentiated by a higher priority is required), the P-GW may configure or add (or insert), in or to the header part of the downlink data, information indicating that the data is intended for creation or configuration of an IMS session including voice media.

In other words, an SIP message such as SIP INVITE is used before a VoLTE session is configured. Since the SIP is transmitted and received in the user plane, the P-GW may transfer "information indicating that the corresponding data is intended for voice media (or indicating that the data includes voice media)" to another node (e.g., S-GW) through the message. Thereby, the network node(s) receiving the SIP message containing the information may perform paging of the data including voice media by assigning the data to a higher priority than the other data/differentiating the data from the other data.

The P-GW may recognize that the data (or message) includes voice media, based on the information acquired from another node (e.g., PCRF (Policy and Charging Rules Function)). For example, it may be determined whether the downlink data (or SIP signaling message) is intended to create/configure an IMS session including voice media or is data for which paging assigned a higher priority (or set to/differentiated by a higher level) is required, based on the information acquired from the PC RF by the P-GW. To this end, the PCRF may interact with the P-CSCF.

Alternatively, the P-GW may determine/consider/recognize that the data (or message) is intended to create/configure an IMS session including voice media or is data for which paging having a higher priority (or set to/differentiated by a higher level), based on explicit or implicit information contained in the received data. For example, the port information (e.g., source port and/or destination port) of the TCP (transmission control protocol) header or UDP (user datagram protocol) header of the MT data received by the P-GW may contain information explicitly indicating that the data contains voice media or information implying that the data contains voice media. Such explicit or implicit information may be provided by the P-CSCF.

In addition, the "information indicating that the data is intended for voice media" which the P-GW includes in the message (or data) may consist of explicit or implicit information, come in various formats, or be interpreted differently. For example, the "information indicating that the data is intended for voice media" may be defined as information indicating that the message is SIP signaling for a call (voice call or video call) containing voice media, information indicating that the message is a control message for creating or configuring an IMS session, information indicating that the message is SIP signaling for using a bearer having QCI=1, information indicating that the message is a paging request having a higher priority (or set to/differentiated by a higher level), or the like.

One or more pieces of the "information indicating that the data is intended for voice media" may be contained in the message (or data). The P-GW may include the "information indicating that the data is intended for voice media" in the header of the message (or data). To this end, for example, a reserved bit or spare bit may be used in the basic header of GTP-U (GPRS tunneling protocol user plane), or a new value may be defined and used in the existing information element (IE). Alternatively, a new type of extension header may be defined and used for the extension header of the GTP-U, or an existing extension header may be modified and used.

If the downlink data (or MT data) consists of multiple packets, the P-GW may include the "information indicating that the data is intended for voice media" only in the first packet among the multiple packets, or may include the information in the respective packets.

In addition, the P-GW may perform the aforementioned operation if the condition in operations i) or ii) is satisfied. Additionally, whether or not to perform the operation may be determined based on the extent of congestion of the network, the operator policy, the local policy, configuration information, whether or not UE roaming is performed, and the like.

In step 2 of FIG. 15, if the S-GW receives the downlink data from the P-GW, the S-GW may transmit a message requesting paging, namely a downlink data notification (DDN) message to the MME which serves UE1. The DDN message may contain EPS bearer ID information and ARP (Allocation and Retention Priority) information.

Herein, the S-GW may additionally perform the following operations.
i) The S-GW may determine (or consider or recognize) whether the downlink data (or MT data) is data using an EPS bearer for SIP signaling (or SIP signaling) and whether the SIP signaling creates or configures an IMS session including voice media (wherein the EPS bearer for SIP signaling may be a bearer having a QCI (QoS (Quality of Service) Class Identifier) set to 5 in the PDN for the IMS service, and the voice media may use a bearer having the QCI set to 1).
ii) The S-GW may determine (or consider or recognize) whether the downlink data (or MT data) is data for which paging having a higher priority (or set to/differentiated by a higher level) is required.

If any one of the conditions in the operations i) and ii) is satisfied (namely, if the downlink data is data using an EPS bearer for SIP signaling for creating an IMS session including voice media and/or if the downlink data is data for which paging assigned/differentiated by a higher priority is required), the S-GW may configure or add (or insert), in or to the DDN message, information indicating that the data is intended for creation or configuration of an IMS session including voice media.

In step 1, the S-GW may recognize, from the "information indicating that the data is intended for voice media" contained in the data (or message) that the P-GW delivers to the S-GW, that the data (or message) is intended to create/configure an IMS session including voice media or that the data is data for which paging assigned higher priority (or set to/differentiated by a higher level) is required.

The "information indicating that the message is a paging request for voice media" which the S-GW includes in a DDN message may consist of explicit or implicit information, come in various formats, or be interpreted differently. For example, the "information indicating that the message is a paging request for voice media" may be defined as information indicating that the message is a paging request for SIP signaling for a call (voice call or video call) containing voice media, information indicating that the message is a paging request for a control message for creating or configuring an IMS session including voice media, information indicating that the message is a paging request for SIP signaling for using a bearer having QCI=1, information indicating that the message is a paging request having a higher priority (or set to/differentiated by a higher level), or the like.

One or more pieces of the "information indicating that the message is a paging request for voice media" may be contained in the paging request message. To add the information, the S-GW may define and use a new IE in the DDN message, or define and use a new value for the existing IE.

In addition, the S-GW may perform the aforementioned operation if the condition in operations i) or ii) is satisfied. Additionally, whether or not to perform the operation may be determined based on the extent of congestion of the network, the operator policy, the local policy, configuration information, whether or not UE roaming is performed, and the like.

Additionally, if the S-GW receives data (or a message) containing the aforementioned "information indicating that the data is intended for voice media" from the P-GW while waiting for a user plane to be formed after receiving, from the P-GW, general data (i.e., non-IMS-based packet) for the UE-1, SIP signaling irrespective of creation/configuration of an IMS session including voice media, or data for which paging assigned a higher priority (or set to/differentiated by a higher level) is not required and then transmitting a DDN message for request for paging to the MME, the S-GW may transmit a new DDN message to the MME.

In the example of the present invention described above, if the P-GW determines that the differentiated paging (or paging assigned a higher priority) is applied to downlink data, the P-GW may add, to the message containing the downlink data, information indicating that the differentiated paging is applied, and the S-GW may determine that the differentiated paging is applied to the downlink data, based on the information indicating that the differentiated paging is applied in the message. Herein, the P-GW may add information indicating to the GTP-U basic header or GTP-U extended header of the message containing the downlink data. As another example, the P-GW may receive downlink data containing information indicating that differentiated paging is applied (namely, the information indicating that differentiated paging is applied has been added to the downlink data by another network node (e.g., P-CSCF), and the P-GW receives the downlink data), and transmit the same to the S-GW. Thereby, the operation of the S-GW determining that differentiated paging is applied may change with respect to the downlink data. This case will be described in detail below.

Hereinafter, description will be given of a case where the S-GW determines whether the differentiated paging is applied, based on the information contained in the GTP-U header.

In this case, the S-GW need not examine or analyze a downlink data packet transmitted to the UE to extract information indicating that differentiated paging is applied. That is, the S-GW only needs to examine or analyze the GTP-U header that is used for data transmission between the P-GW and the S-GW, and therefore operation of the S-GW may be simplified. In addition, examination or analysis of the GTP-U performed by the S-GW is an operation that is intended to extract the downlink data receiver information and is conventionally performed. Accordingly, this operation is not a new operation in view of the S-GW, and thus does not increase complexity. In addition, the same format or the same value for the information indicating that differentiated paging is applied may be defined in the GTP-U basic header or extended header for different operators. Accordingly, even if the P-GW and the S-GW belong to different operators while the UE is performing roaming, the S-GW may determine whether differentiated paging is applied to the downlink data according to the same operation as in the case where the S-GW and the P-GW belong to the same operator.

On the other hand, the P-GW may need to additionally perform in a newly defined operation compared to the conventional cases because the P-GW determines whether differentiated paging is applied to the downlink data, and thus needs to perform an operation of adding, to the GTP-U header of a message containing the downlink data, information indicating that differentiated paging is applied.

Hereinafter, description will be given of a case where the S-GW determines whether the differentiated paging is applied based on the information contained in the downlink data, as another example.

In this case, the P-GW perform the operation of adding, to the GTP-U of a message delivered to the S-GW, the information indicating that differentiated paging is applied. Accordingly, complexity does not increase access the P-GW does not perform an additional operation.

On the other end, the S-GW needs to examine or analyze downlink data transmitted to the UE in order to extract information indicating that differentiated paging is applied to the downlink data. In addition, if it's the downlink data contains information indicating that the differentiated paging is applied, the S-GW is to perform an operation of removing, from the downlink data, information indicating that the differentiated paging is applied before the S-GW transmits the downlink data to the UE. This is because the information indicating that the differentiated paging is applied is unnecessary for the UE and the information may cause an abnormal operation to the UE. Operators may define different formats and/or different values for information indicating that differentiated paging is applied and at the same to the downlink data. Accordingly, the P-GW and the S-GW belong to different operators with the UE performing roaming, the S-GW needs to pre-recognize (or pre-configure) the formats and values defined for the information indicating that the differentiated paging is applied with respect to all P-GWs connected thereto. This may be disadvantages for extensibility of application of the differentiated paging.

In step 3 of FIG. 15, the MME may transmit a response message, i.e., a DDN Ack message to the S-GW in response to the paging request (or DDN message).

In step 4 of FIG. 15, the MME having received the DDN message from the S-GW may transmit a paging message to eNodeBs belonging to TA(s) registered by the UE.

Herein, the MME may additionally perform the following operations.

If the DDN message which the MME has received from the S-GW contains the "information indicating that the message is a paging request for voice media" (namely, if the DDN message is a paging request for data employing an EPS bearer (e.g., a bearer having QCI=5 and the PDN for an IMS service) for SIP signaling and the SIP signaling is intended to create/configure an IMS session including voice media (e.g., voice media using a bearer having QCI=1, or if the DDN message is a paging request assigned a higher priority (or set to/differentiated by a higher level)), the MME may include "information indicating that the message he is a paging request assigned a higher priority (or set to/differentiated by a higher level)" in the paging message transmitted to the eNodeB(s).

The "information indicating that the message is a paging request assigned a higher priority" which the MME includes in the paging message may consist of explicit or implicit information, come in various formats, or be interpreted differently. For example, the "information indicating that the message is a paging request assigned a higher priority " may be defined as information indicating that the message is a paging request for SIP signaling for a call (voice call or video call) containing voice media, information indicating that the message is a paging request for a control message for creating or configuring an IMS session including voice media, information indicating that the message is a paging request for SIP signaling, information indicating that the message is a paging request for SIP signaling for using a bearer having QCI=1, EPS bearer ID (or E-RAB (E-UTRAN Radio Access Bearer) ID) information, information indicating that the message is a differentiated paging request, or the like.

One or more pieces of the "information indicating that the message is a paging request assigned a higher priority" may be contained in the paging request message. To add the information, the MME may define and use a new IE in the paging, define and use a new value for the existing IE (e.g., a Paging Priority IE), or use the existing value of the existing IE (e.g., a Paging Priority IE).

The MME may perform the aforementioned operation based on whether the DDN message received from the S-GW contains the "information indicating that the message is a paging request for voice media". The MME may separately or additionally determine whether or not to perform the operation based on the extent of congestion of the network, the operator policy, the local policy, configuration information, whether or not UE roaming is performed, subscriber information (e.g., the class of the subscriber), capability information about the UE (e.g., whether the UE is capable of performing CSFB (Circuit Switched Fall-Back)), and the like.

In step 5 of FIG. 15, the eNodeB having received a paging message from the MME may perform a paging operation for UE-1.

The eNodeB may perform the page operation for the UE based on "indicating that the message is a paging request assigned a higher priority (or set to/differentiated by a higher level)" which the MME has included in the paging message. The eNodeB may separately or additionally determine whether or not to perform the paging operation for the UE based on the extent of congestion of the network, the operator policy, the local policy, configuration information, capability information about the UE, and the like.

For example, if the network is congested, the eNodeB may not perform general paging. However, if the paging message received from the MME contains the "information indicating that the message is a paging request assigned a higher priority", the eNodeB may perform the page operation for UE-1.

In step 6 of FIG. 15, if UE1 in the ECM-IDLE state receives a paging indication in E-UTRAN access, UE1 may initiate a service request procedure triggered by the UE (for details, see section 5.3.4.1 in 3GPP TS 23.401).

In step 7 of FIG. 15, the S-GW may transmit downlink data to the UE over the E-UTRAN.

In the example of the present invention described above, it has been mainly given of a paging method for providing a service by distinguishing (or differentiating) an IMS session (e.g., voice call or video call) for data containing voice media from the other data. However, the scope of the present invention is not limited thereto. That is, the principle of the present invention of performing high priority or differentiated paging (or paging request) for downlink data containing voice media is also applicable to an IMS service for which prioritized/differentiated paging should be processed.

The principle of the present invention described above is also applicable to a non-IMS service (i.e., a general data service).

While the example of the present invention focuses on a case where the S-GW sends a paging request to the MME, the principle of the present invention is also applicable to a case where the S-GW sends a paging request to the SGSN.

The exemplary method illustrated in FIG. 15 is expressed as a series of operations for simplicity of description, and is not intended to limit the sequential order of the steps. When necessary, the steps may be performed simultaneously or in a different order. In addition, not all steps illustrated in FIG. 15 are needed to implement the proposed method.

Regarding the method of the present invention illustrated in FIG. 15, the details described in various embodiments of the present invention may be independently applied or implemented such that two or more embodiments are simultaneously applied.

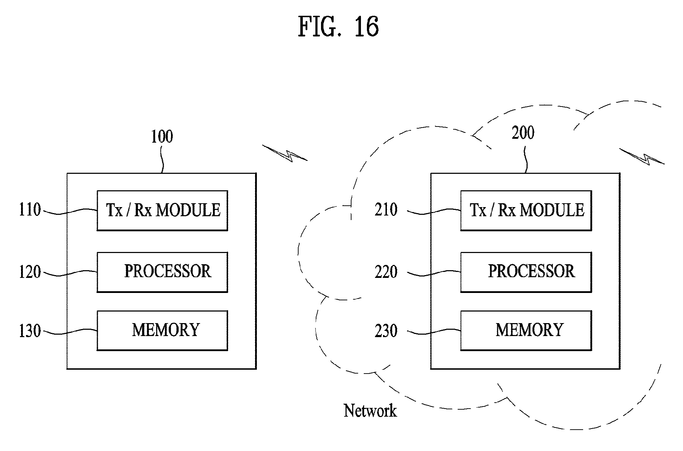

FIG. 16 illustrates preferred configuration of a UE and a network node according to a embodiment of the present invention.

Referring to FIG. 16, the UE 100 according to the present invention may include a transceiver module 110, a processor 120, and a memory 130. The transceiver module 110 may be configured to transmit and receive various signals, data and information to and from an external device. The UE 100 may be connected to the storage device by wire and/or wirelessly. The processor 150 may control overall operation of the UE 100, and be configured to calculate and process information for the UE 100 to transmit and receive to and from the external device. In addition, the processor 120 may be configured to perform the proposed operations of the UE. The memory 130 may store the calculated and processed information for a predetermined time, and may be replaced by another constituent such as a buffer (not shown).

Referring to FIG. 16, the the network node 200 accoridng to the present invention may include a transceiver module 210, a processor 220 and a memory 230. The transceiver module 210 may be configured to transmit and receive various signals, data and information to and from an external device. The network node 200 may be connected to the storage device by wire and/or wirelessly. The processor 220 may control overall operation of the network node 200, and be configured to calculate and process information for the network node 200 to transmit and receive to and from the external device. In addition, the processor 220 may be configured to perform the proposed operations of the network node. The memory 230 may store the calculated and processed information for a predetermined time, and may be replaced by another constituent such as a buffer (not shown).

For configuration of the UE 100 and the network apparatus, the details described in various embodiments of the present invention may be independently applied or implemented such that two or more embodiments are simultaneously applied. For simplicity, redundant description is omimtted.

The embodiments of the present invention may be implemented through various means. For example, the embodiments may be implemented by hardware, firmware, software, or a combination thereof.

When implemented by hardware, a method according to embodiments of the present invention may be embodied as one or more application specific integrated circuits (ASICs), one or more digital signal processors (DSPs), one or more digital signal processing devices (DSPDs), one or more programmable logic devices (PLDs), one or more field programmable gate arrays (FPGAs), a processor, a controller, a microcontroller, a microprocessor, etc.

When implemented by firmware or software, a method according to embodiments of the present invention may be embodied as a module, a procedure, or a function that performs the functions or operations described above. Software code may be stored in a memory unit and executed by a processor. The memory unit is located at the interior or exterior of the processor and may transmit and receive data to and from the processor via various known means.

Preferred embodiments of the present invention have been described in detail above to allow those skilled in the art to implement and practice the present invention. Although the preferred embodiments of the present invention have been described above, those skilled in the art will appreciate that various modifications and variations can be made in the present invention without departing from the spirit or scope of the invention disclosed in the appended claims. Thus, the present invention is not intended to be limited to the embodiments described herein, but is intended to accord with the widest scope corresponding to the principles and novel features disclosed herein.

### [Industrial Applicability]

Embodiments of the present invention are applicable to various mobile communication systems.

## Claims

1. A method for supporting paging for an IP (Internet Protocol) Multimedia Subsystem (IMS) service for a terminal in a network node, the method comprising:
receiving downlink data directed to the terminal;
adding, when it is determined that differentiated paging is applied to the downlink data, information indicating that the differentiated paging is applied to a message containing the downlink data; and
transmitting the message containing the information to another network node.

2. The method according to claim 1, wherein the downlink data subjected to the differentiated paging is data using a bearer for Session Initiation Protocol (SIP) signaling for generating an IMS session including voice media.

3. The method according to claim 1, wherein the information indicating that the differentiated paging is applied comprises at least one of
information indicating that the message is a control message for creating an IMS session including voice media;
information indicating that the downlink data is related to voice media;
information indicating that the message is SIP signaling for a call containing voice media;
information indicating that the message is SIP signaling for using a bearer having a QCI (QoS (Quality of Service) Class Identifier) set to 1; and
information indicating that paging set to a high priority is applied to the downlink data.

4. The method according to claim 1, wherein the information indicating that the differentiated paging is applied is contained in a GTP-U (GPRS Tunnelling Protocol User Plane) basic header or GTP-U extended header of the message.

5. The method according to claim 1, wherein the determination is based on information received from a Policy and Charging Rules Function (PCRF).

6. The method according to claim 1, wherein the determination is based on explicit or implicit information contained in the downlink data received by the network node.

7. The method according to claim 1, wherein the adding is performed based on at least one of an extent of network congestion, an operator policy, a local policy, configuration information, and whether roaming of the terminal is performed.

8. The method according to claim 1, wherein the network node is a packet data network gateway (PDN GW), and the another network node is a serving gateway (S-GW).

9. A method for supporting paging for an IP (Internet Protocol) Multimedia Subsystem (IMS) service for a terminal in a network node, the method comprising:
receiving a message containing downlink data directed to the terminal;
adding, when it is determined that differentiated paging is applied to the downlink data, information indicating that the differentiated paging is applied to a downlink data notification (DDN) message; and
transmitting the DDN message containing the information to another network node.

10. The method according to claim 9, wherein the determination is based on information indicating that the differentiated paging is applied to the downlink data, the information being contained in the message containing the downlink data.

11. The method according to claim 10, wherein the information indicating that the differentiated paging is applied to the downlink data is contained in a GTP-U (GPRS Tunnelling Protocol User Plane) basic header or GTP-U extended header of the message containing the downlink data, or is explicit or implicit information contained in the downlink data.

12. The method according to claim 9, wherein the network node is a serving gateway (S-GW), and the another network node is a Mobility Management Entity (MME) or a Serving GPRS (General Packet Radio Service) Supporting Node (SGSN).

13. A method for performing paging for an IP (Internet Protocol) Multimedia Subsystem (IMS) service for a terminal in a network node, the method comprising:
receiving a downlink data notification (DDN) message;
adding, when it is determined that the DDN message contains information indicating that differentiated paging is applied, the information to a paging message; and
transmitting the paging message to one or more base stations.

14. The method according to claim 13, wherein the information indicating that the differentiated paging is applied comprises at least one of
information indicating that the DDN message is a paging request for voice media,
information indicating that the DDN message is a paging request for SIP signaling for using a bearer having a QCI (QoS (Quality of Service) Class Identifier) set to 1; and
information indicating that paging set to a high priority should be applied to the DDN message.

15. The method according to claim 13, wherein the information indicating that the differentiated paging is applied comprises at least one of
information announcing a paging request for SIP signaling for a call including voice media,
information indicating a paging request for a control message for creation or configuration of an IMS session including voice media;
information indicating a paging request for SIP signaling,
information indicating a paging request for SIP signaling for using a bearer having QCI=1;
EPS bearer ID or E-RAB (E-UTRAN Radio Access Bearer) ID information; and information indicating a high priority paging request.

16. The method according to claim 13, wherein the adding is performed based on at least one of an extent of network congestion, an operator policy, a local policy, configuration information, whether roaming of the terminal is performed, subscriber information related to the terminal and capability information about the terminal.

17. The method according to claim 13, wherein the DDN message is received from a serving gateway (S-GW),
wherein the network node is a Mobility Management Entity (MME) or a Serving GPRS (General Packet Radio Service) Supporting Node (SGSN).

18. A network node for supporting paging for an IP (Internet Protocol) Multimedia Subsystem (IMS) service for a terminal, the network node comprising:
a transceiver module; and
a processor,
wherein the processor is configured to:
receive downlink data directed to the terminal using the transceiver module;
add, when it is determined that differentiated paging is applied to the downlink data, information indicating that the differentiated paging is applied to a message containing the downlink data; and
transmit the message containing the information to another network node using the transceiver module.

19. A network node for supporting paging for an IP (Internet Protocol) Multimedia Subsystem (IMS) service for a terminal, the network node comprising:
a transceiver module; and
a processor,
wherein the processor is configured to:
receive a message containing downlink data directed to the terminal using the transceiver module;
add, when it is determined that differentiated paging is applied to the downlink data, information indicating that the differentiated paging is applied to a downlink data notification (DDN) message; and
transmit the DDN message containing the information to another network node using the transceiver module.

20. A network node for performing paging for an IP (Internet Protocol) Multimedia Subsystem (IMS) service for a terminal, the network node comprising:
a transceiver module; and
a processor,
wherein the processor is configured to:
receive a downlink data notification (DDN) message using the transceiver module;
add, when it is determined that the DDN message contains information indicating that differentiated paging is applied, the information to a paging message; and
transmit the paging message to one or more base stations using the transceiver module.
